# EUROPÄISCHE PATENTSCHRIFT

(11) **EP 4 291 965 B1**
(45) Veröffentlichungstag und Bekanntmachung des Hinweises auf die Patenterteilung: **22.10.2025**
(21) Anmeldenummer: 22700716.8
(22) Anmeldetag: 05.01.2022
(51) Int. Cl.: G05D 1/00, B60W 60/00

(54) **VERFAHREN ZU EINER ERMITTLUNG EINER FORTBEWEGUNGSRICHTUNG EINES ZUMINDEST TEILAUTONOMEN ODER AUTONOMEN BEWEGBAREN GERÄTS UND VORRICHTUNG ODER SYSTEM**
METHOD FOR DETERMINING A DIRECTION OF TRAVEL OF AN AT LEAST SEMI-AUTONOMOUS OR AUTONOMOUS MOVABLE DEVICE, AND APPARATUS OR SYSTEM
PROCÉDÉ DE DÉTERMINATION D'UNE DIRECTION DE DÉPLACEMENT D'UN DISPOSITIF MOBILE AU MOINS SEMI-AUTONOME OU AUTONOME, ET APPAREIL OU SYSTÈME

(30) Priorität: 15.02.2021 DE 102021201410
(43) Veröffentlichungstag der Anmeldung: 20.12.2023
(73) Patentinhaber: Robert Bosch GmbH, 70442 Stuttgart (DE)
(72) Erfinder: PALMIERI, Luigi, 71229 Leonberg (DE); RUDENKO, Andrey, 70839 Gerlingen (DE); ARRAS, Kai Oliver, 70180 Stuttgart (DE)
(86) Internationale Anmeldenummer: PCT/EP2022/050129
(87) Internationale Veröffentlichungsnummer: WO 2022/171368

(56) Entgegenhaltungen:
- US-A1- 2012 316 725
- US-A1- 2019 152 490
- BRITO BRUNO ET AL: "Model Predictive Contouring Control for Collision Avoidance in Unstructured Dynamic Environments", IEEE ROBOTICS AND AUTOMATION LETTERS, IEEE, vol. 4, no. 4, 1 October 2019 (2019-10-01), pages 4459 - 4466, XP011752515, DOI: 10.1109/LRA.2019.2929976

## Beschreibung

### Stand der Technik

Die Druckschrift US 2019/152490 A1 offenbart ein System und ein Verfahren zu einer Bestimmung einer Objektbewegung und einer Steuerung eines autonomen Fahrzeugs. Das autonome Fahrzeug kann zumindest einen Sensor zur Erfassung von Umgebungsparametern, insbesondere bezüglich statischer und/oder dynamischer Objekte, aufweisen. Die Objektbewegung, insbesondere eine Bewegung eines Objekts und/oder von Objekten in der Umgebung des Fahrzeugs kann anhand eines Vorhersagesystems vorausgesagt werden. Das Vorhersagesystem kann eine oder mehrere vorhergesagte Interaktionstrajektorien für das Objekt zumindest teilweise auf der Grundlage einer Interaktion, beispielsweise zwischen einem Objekt und einem weiteren Objekt, bestimmen. Das Vorhersagesystem kann eine anfänglich vorhergesagte, insbesondere zielorientierte, Trajektorie eines Objekts in der Umgebung des autonomen Fahrzeugs bestimmen.

Ferner wird auf die Druckschriften US 2012/316725 A1 und XP11752515 BRITO BRUNO ET AL: "Model Predictive Contouring Control for Collision Avoidance in Unstructured Dynamic Environments", IEEE ROBOTICS AND AUTOMATION LETTERS, verwiesen.

Ausgehend vom Stand der Technik ist eine Aufgabe der Erfindung eine genaue, sichere und effiziente Steuerung für ein autonomes Fahrzeug, bzw. eines zumindest teilautonomen oder autonomen bewegbaren Geräts bereitzustellen.

### Offenbarung der Erfindung

Es wird ein Verfahren zu einer Ermittlung einer Fortbewegungsrichtung und/ oder einer zukünftigen Fortbewegungsstrecke eines zumindest teilautonomen oder autonomen bewegbaren Geräts, insbesondere eines Roboters und/oder eines Fahrzeugs, in einer dynamisch veränderlichen Umgebung vorgeschlagen, wel-ches zumindest die folgenden Schritte umfasst:
- Erfassen und/oder Ermitteln einer Vielzahl von Umgebungsparametern, die jeweils zumindest einem sich bewegenden externen Objekt in der das Gerät umgebenden Umgebung zuordenbar sind;
- Ausführen zumindest eines Bewegungsprognosealgorithmus zu einer Ermittlung von jeweils zumindest einer wahrscheinlichkeitstheoretischen Bewegungsprognosekenngröße für erfasste externe Objekte in Abhängigkeit von den einzelnen externen Objekten zugeordneten erfassten Umgebungsparametern;
- Ausführen zumindest eines Bewegungsbestimmungsalgorithmus zu einer Ermittlung von jeweils zumindest einer Kurzzeitbewegungskenngröße für erfasste externe Objekte in Abhängigkeit von den einzelnen externen Objekten zugeordneten erfassten Umgebungsparametern; wobei die zumindest eine Kurzzeitbewegungskenngröße über ein physikalisches Rechenmodell eindeutig berechenbar ist;
wobei der Bewegungsprognosealgorithmus und der Bewegungsbestimmungsalgorithmus zu einer Ermittlung einer zukünftigen Fortbewegungsrichtung und/oder einer zukünftigen Fortbewegungsstrecke des Geräts zumindest im Wesentlichen unabhängig voneinander ausgeführt werden.

Darunter, dass "der Bewegungsprognosealgorithmus und der Bewegungsbestimmungsalgorithmus zumindest im Wesentlichen unabhängig voneinander ausgeführt werden" soll insbesondere verstanden werden, dass Eingangsparameter und Ausgangsparameter der zwei Algorithmen unabhängig voneinander sind. Bevorzugt erfolgt ein Ausführen des Bewegungsprognosealgorithmus und ein Ausführen des Bewegungsbestimmungsalgorithmus zeitlich unabhängig voneinander, wobei insbesondere der Bewegungsprognosealgorithmus und der Bewegungsbestimmungsalgorithmus auch zeitgleich ausgeführt werden können. Insbesondere ist denkbar, dass der Bewegungsprognosealgorithmus und der Bewegungsbestimmungsalgorithmus gleiche Eingangsparameter verwenden. Bevorzugt sind Eingangsparameter des Bewegungsprognosealgorithmus oder des Bewegungsbestimmungsalgorithmus unabhängig von Ausgangsparametern des jeweils anderen zumindest im Wesentlichen zeitgleich auszuführenden Algorithmus, insbesondere des Bewegungsbestimmungsalgorithmus oder des Bewegungsprognosealgorithmus. Es ist denkbar, dass der Bewegungsprognosealgorithmus und der Bewegungsbestimmungsalgorithmus über eine einzelne Recheneinheit einer Steuer- und/oder Regeleinheit ausgeführt werden oder einzeln über zumindest zwei unterschiedliche Recheneinheiten einer Steuer- und/oder Regeleinheit o.dgl. ausgeführt werden. Bevorzugt werden der Bewegungsprognosealgorithmus und der Bewegungsbestimmungsalgorithmus periodisch ausgeführt, insbesondere während eines Betriebs, einer Steuerungsplanung und/oder einer Bewegung des Geräts. Vorzugsweise sind der Bewegungsbestimmungsalgorithmus und der Bewegungsprognosealgorithmus jeweils zu einer Bestimmung einer zukünftigen Fortbewegungsstrecke des Geräts durch die Umgebung eingerichtet. Unter "eingerichtet" soll insbesondere speziell programmiert und/oder speziell ausgelegt verstanden werden. Darunter, dass ein Objekt zu einer bestimmten Funktion eingerichtet ist, soll insbesondere verstanden werden, dass das Objekt diese bestimmte Funktion in zumindest einem Anwendungs- und/oder Betriebszustand erfüllt und/oder ausführt. Insbesondere ist die zukünftige Fortbewegungsstrecke des Geräts über die Fortbewegungsrichtung ermittelt. Bevorzugt ist die zukünftige Fortbewegungsstrecke des Geräts als eine Bewegung, vorzugsweise eine Bewegungsänderung und/oder eine gleichbleibende Bewegung, des Geräts in einem zukünftigen Zeitintervall ausgebildet. Vorzugsweise kann die zukünftige Fortbewegungsstrecke des Geräts auch lediglich eine Drehung des Geräts und/oder ein Stillstehen des Geräts in dem zukünftigen Zeitintervall umfassen. Insbesondere ist der Bewegungsbestimmungsalgorithmus zu einer Ermittlung einer Notwendigkeit einer definitiven und/oder direkten Steuerung des Geräts eingerichtet, beispielsweise einer Notbremsung und/oder einem Ausweichmanöver. Bevorzugt ist der Bewegungsbestimmungsalgorithmus dazu eingerichtet, eine Vielzahl von Kurzzeitbewegungskenngrößen auszugeben, welche insbesondere jeweils einem externen Objekt einer Mehrzahl von erfassten externen Objekten zugeordnet ist. Vorzugsweise ist der Bewegungsprognosealgorithmus zu einer Ermittlung von einer Vielzahl von möglichen zukünftigen Fortbewegungsstrecken eingerichtet, welche insbesondere jedoch noch nicht eindeutig vorhergesagt werden können.

Unter einem "Umgebungsparameter" soll insbesondere ein Parameter verstanden werden, welcher in der das Gerät und/oder eine Erfassungseinheit umgebenden Umgebung erfassbar ist. Insbesondere sind die Umgebungsparameter jeweils als eine physikalische Eigenschaft eines externen Objekts in der Umgebung ausgebildet, welche insbesondere einer Bewegung des externen Objekts zugeordnet sind. Insbesondere wird mittels der Erfassungseinheit die Umgebung auf externe Objekte untersucht. Bevorzugt werden innerhalb eines maximalen Erfassungsbereichs externe Objekte in der das Gerät und/oder die Erfassungseinheit umgebenden Umgebung erfasst, wobei insbesondere für jedes erfasste externe Objekt jeweils zumindest ein Umgebungsparameter ermittelt wird, welcher vorzugsweise dem jeweiligen externen Objekt zugeordnet wird. Es ist denkbar, dass lediglich sich bewegende externe Objekte mittels der Erfassungseinheit erkannt und/oder bestimmt werden, wobei jeweils lediglich sich bewegenden externen Objekten Umgebungsparameter zugeordnet werden. Besonders bevorzugt ist die Erfassungseinheit zu einer Erfassung von einer Vielzahl von verschiedenen Umgebungsparametern eingerichtet. Alternativ oder zusätzlich ist die Erfassungseinheit und/oder die Steuer- und/oder Regeleinheit zu einer Ermittlung der Vielzahl von verschiedenen Umgebungsparametern aus über die Erfassungseinheit erfassten Daten eingerichtet. Bevorzugt sind die Umgebungsparameter jeweils als eine Bewegungsrichtung eines externen Objekts, als eine räumliche Größe eines externen Objekts, als eine Masse eines externen Objekts, als eine Geschwindigkeit eines externen Objekts, als eine Beschleunigung eines externen Objekts o.dgl. ausgebildet. Es ist auch denkbar, dass Umgebungsparameter als Parameter einer Relativbewegung eines externen Objekts und des Geräts ausgebildet sind, beispielsweise als eine Geschwindigkeit, eine Beschleunigung o.dgl. Vorzugsweise ist zumindest ein erfasster Umgebungsparameter eines erfassten externen Objekts als ein Abstand des jeweiligen externen Objekts zu der Erfassungseinheit und/oder, insbesondere falls die Erfassungseinheit getrennt von dem Gerät ausgebildet ist, zu dem Gerät ausgebildet. Besonders bevorzugt erfolgt die Erfassung der Umgebungsparameter mittels der Erfassungseinheit kontinuierlich oder periodisch. Vorzugsweise werden alle erfassten Umgebungsparameter zum Ausführen des Bewegungsprognosealgorithmus und/oder zum Ausführen des Bewegungsbestimmungsalgorithmus herangezogen, welche vorzugsweise innerhalb eines vorgegebenen Zeitintervalls erfasst wurden. Bevorzugt ist das Zeitintervall über eine Dauer bzw. einen zeitlichen Abstand zweier aufeinanderfolgender Iterationen des Bewegungsprognosealgorithmus und/oder des Bewegungsbestimmungsalgorithmus gegeben.

Unter einer "wahrscheinlichkeitstheoretischen Bewegungsprognosekenngröße" soll insbesondere eine Kenngröße eines externen Objekts verstanden werden, welche zumindest eine mögliche zukünftige Fortbewegungsstrecke des externen Objekts im Raum und/oder in der Umgebung beschreibt. Vorzugsweise werden mittels des Bewegungsprognosealgorithmus für jedes erfasste, insbesondere sich bewegende, externe Objekt jeweils eine Mehrzahl von wahrscheinlichkeitstheoretischen Bewegungsprognosekenngrößen, insbesondere eine Mehrzahl von möglichen zukünftigen Fortbewegungsstrecken des externen Objekts, ermittelt. Vorzugsweise wird mittels des Bewegungsprognosealgorithmus für jedes erfasste, insbesondere sich bewegende, externe Objekt jeweils genau eine wahrscheinlichste zukünftige Fortbewegungsstrecke aus einer Mehrzahl an möglichen zukünftigen Fortbewegungsstrecken des externen Objekts ausgewählt. Unter einer "Kurzzeitbewegungskenngröße" soll insbesondere eine Kenngröße eines externen Objekts verstanden werden, welche eine Fortbewegungsstrecke des externen Objekts in einem direkt folgenden Zeitintervall, insbesondere einem Kurzzeit-Zeitintervall, beschreibt, vorzugsweise innerhalb von höchstens 10 s, vorzugsweise von höchstens 5 s und bevorzugt von höchstens 2 s. Erfindungsgemäß ist die zumindest eine Kurzzeitbewegungskenngröße über ein physikalisches Rechenmodell, insbesondere im Rahmen der Kinematik, eindeutig berechenbar und insbesondere nicht als stochastische Größe ausgebildet. Insbesondere erfolgen die möglichen zukünftigen Fortbewegungsstrecken, welche über scheinlichkeitstheoretischen Bewegungsprognosekenngrößen beschrieben werden, vollständig innerhalb eines Zeitintervalls von mehr als 20 s, vorzugsweise mehr als 30 s und bevorzugt mehr als 40 s. Insbesondere umfasst die Kurzzeitbewegungskenngröße eine Vielzahl von Positionen des Geräts im Raum auf der zukünftigen Fortbewegungsstrecke des Geräts innerhalb des Kurzzeit-Zeitintervalls. Unter einem "Kurzzeit-Zeitintervall" soll insbesondere ein Zeitintervall von höchstens 10 s, vorzugsweise höchstens 5 s und bevorzugt höchstens 2 s, verstanden werden. Bevorzugt ist ein Kurzzeit-Zeitintervall ein Zeitintervall, in dem ein externes Objekt in Abhängigkeit von Umgebungsparametern des externen Objekts unausweichlich, insbesondere unabhängig von üblichen Steuerkräften und/oder üblichen äußeren Einflüssen, eine Fortbewegungsstrecke zurücklegt. Beispielsweise weist ein Fahrzeug, welches sich mit einer bestimmten Geschwindigkeit bewegt, eine Fortbewegungsstrecke auf, welche unabhängig von möglichen üblichen Einflüssen, wie beispielsweise von einem Bremsen eines Fahrers des Fahrzeugs und/oder von einem üblichen Lenkmanöver auf der von dem Fahrzeug befahrenen Straße, von dem Fahrzeug zurückgelegt wird, wobei ein Kurzzeit-Zeitintervall für das als das Fahrzeug ausgebildete externe Objekt ein Zeitintervall ist, in welchem das Fahrzeug diese Fortbewegungsstrecke zurücklegt. Alternativ ist denkbar, dass eine Länge des Kurzzeit-Zeitintervalls vorgegeben und in der Steuer- und/oder Regeleinheit zum Ausführen des Bewegungsbestimmungsalgorithmus hinterlegt ist. Vorzugsweise ist der Bewegungsprognosealgorithmus dazu eingerichtet, für erfasste externe Objekte jeweils zumindest eine mögliche zukünftige Fortbewegungsstrecke für einen zukünftigen Zeitraum von mindestens 10 s, vorzugsweise mindestens 15 s und bevorzugt mindestens 20 s, zu ermitteln. Unter "eingerichtet" soll insbesondere speziell programmiert, speziell ausgelegt und/oder speziell ausgestattet verstanden werden. Darunter, dass ein Objekt zu einer bestimmten Funktion eingerichtet ist, soll insbesondere verstanden werden, dass das Objekt diese bestimmte Funktion in zumindest einem Anwendungs- und/oder Betriebszustand erfüllt und/oder ausführt.

Bevorzugt ist das Verfahren dazu eingerichtet, in Abhängigkeit von in der Umgebung erfassten externen Objekten, insbesondere von erfassten Umgebungsparametern der externen Objekte, besonders bevorzugt in Abhängigkeit von ermittelten Bewegungsstrecken der erfassten externen Objekte, dynamisch eine Fortbewegungsrichtung des Geräts, insbesondere für eine zukünftige Fortbewegungsstrecke des Geräts, und/oder eine zukünftige Fortbewegungsstrecke des Geräts zu bestimmen, vorzugsweise zu einer autonomen Steuerung des Geräts innerhalb der Umgebung. Vorzugsweise wird das Verfahren, insbesondere der Bewegungsprognosealgorithmus und der Bewegungsbestimmungsalgorithmus, über die Steuer- und/oder Regeleinheit ausgeführt, welche zumindest teilweise oder vollständig als Teil des Geräts ausgebildet ist oder geräteextern ausgebildet ist, beispielsweise als Teil eines Netzwerks, einer Cloud o.dgl. Bevorzugt ist das Verfahren zumindest teilweise, insbesondere mit Ausnahme einer Erfassung der externen Objekte und/oder der Umgebungsparameter, als ein computerimplementiertes Verfahren ausgebildet. Vorzugsweise wird mittels der Erfassungseinheit und/oder der Steuer- und/oder Regeleinheit jedem erfassten externen Objekt zumindest ein erfasster Umgebungsparameter zugeordnet. Bevorzugt werden die erfassten externen Objekte und die erfassten Umgebungsparameter von der Erfassungseinheit zumindest im Wesentlichen direkt an die zumindest eine Steuer- und/oder Regeleinheit übermittelt. Vorzugsweise werden Informationen der erfassten externen Objekte, wie beispielsweise Position, Art, Bewegungszustand o.dgl., sowie dem jeweiligen externen Objekt zugeordnete Umgebungsparameter jeweils in einem Datensatz zusammengefasst, vorzugsweise zum Ausführen des Bewegungsprognosealgorithmus und/oder des Bewegungsbestimmungsalgorithmus. Bevorzugt werden der Bewegungsprognosealgorithmus und der Bewegungsbestimmungsalgorithmus jeweils mit einer Mehrzahl von Datensätzen und/oder für eine Mehrzahl von erfassten externen Objekten ausgeführt. Vorzugsweise werden alle in einem vorgegebenen Zeitraum vor einem Ausführen des Bewegungsprognosealgorithmus und/oder des Bewegungsbestimmungsalgorithmus erfassten externen Objekte oder eine gefilterte Teilmenge aller in dem vorgegebenen Zeitraum vor einem Ausführen des Bewegungsprognosealgorithmus und/oder des Bewegungsbestimmungsalgorithmus erfassten externen Objekte zu dem Ausführen des Bewegungsprognosealgorithmus und/oder des Bewegungsbestimmungsalgorithmus berücksichtigt.

Beispielsweise werden mittels der Erfassungseinheit eine Mehrzahl externe Objekte in der Umgebung des Geräts erfasst. Bevorzugt werden mittels der Erfassungseinheit und/oder der Steuer- und/oder Regeleinheit für jedes erfasste externe Objekt Umgebungsparameter ermittelt und/oder erfasst. Beispielsweise werden für jedes erfasste Objekt eine Position relativ zum Gerät und/oder ein Abstand zu dem Gerät, eine Bewegungsrichtung und eine Geschwindigkeit als Umgebungsparameter erfasst und/oder ermittelt. Insbesondere wird eine Position eines externen Objekts relativ zum Gerät über eine Position des externen Objekts innerhalb einer Bildebene der Erfassungseinheit und über eine Entfernungsmessung des externen Objekts ermittelt. Insbesondere wird eine Geschwindigkeit eines externen Objekts über einen Vergleich von zwei zeitlich hintereinander aufgenommenen Bildern des externen Objekts ermittelt, wobei bevorzugt eine innerhalb eines zwischen den zwei aufgenommenen Bildern vergangenen Zeitintervalls zurückgelegte Strecke ermittelt wird. Beispielsweise wird eine Bewegungsrichtung eines erfassten externen Objekts über einen Vergleich von zwei zeitlich hintereinander ermittelten Positionen des externen Geräts ermittelt. Bevorzugt wird über den Bewegungsbestimmungsalgorithmus für jedes der erfassten externen Objekte jeweils mittels den dem jeweiligen externen Objekt zugeordneten Umgebungsparametern eine zukünftige Fortbewegungsstrecke des externen Objekts innerhalb eines vorgegebenen Kurzzeit-Zeitintervalls ermittelt. Vorzugsweise werden über den Bewegungsprognosealgorithmus für jedes der erfassten externen Objekte jeweils mittels den dem jeweiligen externen Objekt zugeordneten Umgebungsparametern zumindest eine, insbesondere eine Mehrzahl von, mögliche(n) zukünftige(n) Fortbewegungsstrecke(n) des jeweiligen externen Objekts ermittelt, wobei vorzugsweise für jede ermittelte mögliche zukünftige Fortbewegungsstrecke eine Wahrscheinlichkeit bestimmt wird, mit der das jeweilige externe Objekt die ermittelte mögliche zukünftige Fortbewegungsstrecke einschlägt. Es ist denkbar, dass eine Ermittlung der zumindest einen wahrscheinlichkeitstheoretischen Bewegungsprognosekenngröße über den Bewegungsprognosealgorithmus und/oder eine Ermittlung der zumindest einen Kurzzeitbewegungskenngröße über den Bewegungsbestimmungsalgorithmus mit Hilfe eines maschinellen Lernverfahrens, insbesondere eines neuronalen Netzes, erfolgt, wobei insbesondere eine Datenbank oder eine Cloud mit einer Vielzahl von hinterlegten Umgebungsparametern und/oder vergangenen Ermittlungsverfahren herangezogen und ausgewertet wird. Besonders bevorzugt unterscheidet sich eine ermittelte wahrscheinlichkeitstheoretische Bewegungsprognosekenngröße eines externen Objekts von einer ermittelten Kurzzeitbewegungskenngröße des externen Objekts, vorzugsweise unabhängig von einer Situation zwischen dem Gerät und dem externen Objekt. Bevorzugt erfolgt die Ermittlung der Fortbewegungsrichtung und/oder einer zukünftigen Fortbewegungsstrecke des Geräts in Abhängigkeit von der ermittelten wahrscheinlichkeitstheoretischen Bewegungsprognosekenngröße und von der ermittelten Kurzzeitbewegungskenngröße.

Durch die erfindungsgemäße Ausgestaltung des Verfahrens kann eine vorteilhaft schnelle, genaue und sichere Steuerung eines zumindest teilautonomen, insbesondere autonom gesteuerten, Geräts erreicht werden, insbesondere in Gefahrensituationen, wo Bewegungen von externen Objekten relativ zu dem Gerät direkt und unausweichlich das Gerät gefährden. Es kann eine vorteilhaft schnelle Reaktion des Geräts auf spontane Ereignisse in der Umgebung des Geräts ermöglicht werden, vorzugsweise da dazu relevante Informationen über die Kurzzeitbewegungskenngröße separat ermittelbar sind. Es kann ein vorteilhaft geringer Rechenaufwand zum Ausführen des Bewegungsbestimmungsalgorithmus und damit auch ein vorteilhaft schnelles Ausführen einzelner Durchläufe des Bewegungsbestimmungsalgorithmus ermöglicht werden, insbesondere da wahrscheinlichkeitstheoretische Betrachtungen von externen Objekten unabhängig von einer Ermittlung der Kurzzeitbewegungskenngrößen erfolgen kann.

Des Weiteren wird vorgeschlagen, dass das Verfahren zumindest einen, insbesondere anschließend an den Bewegungsbestimmungsalgorithmus erfolgenden, Schritt umfasst, in dem zumindest ein Notfallkollisionsvermeidungsalgorithmus ausgeführt wird, welcher insbesondere als Teil einer modellprädiktiven Regelung des Geräts ausgebildet ist, wobei mittels des Notfallkollisionsvermeidungsalgorithmus eine Notfallsteuerung, insbesondere eine Notfallbremsung und/oder eine Ausweichbewegung, des Geräts erfolgt, falls ein, insbesondere virtueller, Abstand einer Position des Geräts auf der zukünftigen Fortbewegungsstrecke des Geräts und einer in Abhängigkeit von einer ermittelten Kurzzeitbewegungskenngröße ermittelten zukünftigen Position eines externen Objekts zu zumindest einem Zeitpunkt einen vorgegebenen Grenzwert unterschreitet. Es kann eine vorteilhaft schnelle Steuerreaktion des Geräts, insbesondere in Abhängigkeit von der Kurzzeitbewegungskenngröße, ermöglicht werden. Es kann eine vorteilhaft hohe Sicherheit bei der autonomen Steuerung des Geräts erreicht werden. Es ist denkbar, dass der Bewegungsbestimmungsalgorithmus und der Notfallkollisionsvermeidungsalgorithmus zusammen, vorzugsweise nacheinander, ausgeführt werden bzw. einteilig ausgebildet sind. Insbesondere ist der Notfallkollisionsvermeidungsalgorithmus dazu eingerichtet, einer bevorstehenden Kollision des Geräts mit einem externen Objekt über die Notfallsteuerung des Geräts entgegenzuwirken und/oder vorzugsweise diese zumindest im Wesentlichen zu verhindern. Vorzugsweise wird über den Notfallkollisionsvermeidungsalgorithmus zumindest eine Kurzzeitbewegungskenngröße des Geräts bestimmt, welche bevorzugt eine Bewegung des Geräts innerhalb eines direkt anschließenden Kurzzeit-Zeitintervalls beschreibt. Bevorzugt wird zur Bestimmung der zumindest einen Kurzzeitbewegungskenngröße des Geräts zumindest eine Bewegungskenngröße des Geräts abgerufen. Vorzugsweise wird die Bewegungskenngröße des Geräts mittels der Steuer- und/oder Regeleinheit, insbesondere der Recheneinheit, über eine an dem Gerät angeordnete Steuereinheit, über eine Antriebseinheit des Geräts, über die Erfassungseinheit oder über eine andere Sensoreinheit zur Erfassung und/oder Ermittlung der Bewegungskenngröße des Geräts abgerufen. Insbesondere wird die zumindest eine Bewegungskenngröße des Geräts periodisch oder kontinuierlich abgerufen, wobei insbesondere eine Übermittlung der Bewegungskenngröße des Geräts, welche für den Notfallkollisionsvermeidungsalgorithmus herangezogen wird, vor einer Bestimmung der Kurzzeitbewegungskenngröße des Geräts erfolgt. Unter einer "Bewegungskenngröße" soll insbesondere eine Kenngröße eines Körpers, insbesondere des Geräts, verstanden werden, welche eine, insbesondere momentane, Bewegung des Körpers im Raum beschreibt. Beispielsweise ist die Bewegungskenngröße, als eine Bewegungsrichtung des Geräts im Raum, als eine Geschwindigkeit des Geräts, als eine Masse des Geräts, beispielsweise ein Leergewicht und/oder ein Ladegewicht des Geräts o.dgl. ausgebildet. Vorzugsweise wird die Kurzzeitbewegungskenngröße des Geräts in Abhängigkeit der Bewegungskenngröße des Geräts bestimmt. Bevorzugt ist die Kurzzeitbewegungskenngröße des Geräts als eine zukünftige Fortbewegungsstrecke des Geräts in einem Kurzzeit-Zeitintervall ausgebildet. Vorzugsweise wird über den Notfallkollisionsvermeidungsalgorithmus die Position des Geräts auf der zukünftigen Fortbewegungsstrecke des Geräts mit einer Mehrzahl von in Abhängigkeit von ermittelten Kurzzeitbewegungskenngrößen ermittelten zukünftigen Fortbewegungsstrecken der erfassten externen Objekte verglichen. Insbesondere wird über den Notfallkollisionsvermeidungsalgorithmus für jeden Zeitpunkt der herangezogenen Fortbewegungsstrecken ein minimaler Abstand des Geräts und der einzelnen externen Objekte ermittelt. Vorzugsweise wird mittels des Notfallkollisionsvermeidungsalgorithmus ein Ausgabesignal zur Ansteuerung einer Steuereinheit des Geräts, insbesondere zur Durchführung der Notfallsteuerung, ausgegeben, falls zumindest ein ermittelter minimaler Abstand des Geräts und eines einzelnen externen Objekts den zumindest einen vorgegebenen Grenzwert unterschreitet. Bevorzugt wird der zumindest eine vorgegebene Grenzwert, beispielsweise bei einer Montage, einer Inbetriebnahme oder einer Wartung des Geräts, in der Steuer- und/oder Regeleinheit hinterlegt. Alternativ oder zusätzlich ist denkbar, dass die Steuer- und/oder Regeleinheit den zumindest einen vorgegebenen Grenzwert periodisch von zumindest einer externen Einheit abfragt. Bevorzugt werden in der Steuer- und/oder Regeleinheit eine Vielzahl von vorgegebenen Grenzwerten zu einem Heranziehen für den Vergleich hinterlegt. Es ist denkbar, dass in Abhängigkeit von einer Art des jeweiligen betrachteten externen Objekts, von einer momentanen Geschwindigkeit des Geräts und/oder des externen Objekts o.dgl. jeweils genau ein vorgegebener Grenzwert für den Vergleich ausgewählt wird. Beispielsweise wird mittels der Steuer- und/oder Regeleinheit für ein als Busch ausgebildetes externes Objekt, welches beispielsweise mittels der Erfassungseinheit identifiziert wird, und/oder bei einer Geschwindigkeit des Geräts von weniger als 1 m/s ein geringerer vorgegebener Grenzwert aus einer Vielzahl von Grenzwerten ausgewählt wie bei einem als Fahrzeug ausgebildeten externen Objekt bei gleicher Geschwindigkeit.

Zudem wird vorgeschlagen, dass das Verfahren zumindest einen, insbesondere anschließend an den Bewegungsprognosealgorithmus erfolgenden, Schritt umfasst, in dem zumindest ein Wegfindungsalgorithmus, insbesondere ein Theta*-Wegfindungs-Algorithmus, ausgeführt wird, wobei eine zukünftige Fortbewegungsstrecke des Geräts mittels des Wegfindungsalgorithmus in Abhängigkeit von den ermittelten wahrscheinlichkeitstheoretischen Bewegungsprognosekenngrößen der erfassten externen Objekte dynamisch bestimmt wird. Es kann eine wahrscheinlichkeitsorientierte Streckenplanung des Geräts ermöglicht werden, vorzugsweise unabhängig von einer Reaktion auf spontane Gefahrensituationen, insbesondere von dem Notfallkollisionsvermeidungsalgorithmus, und/oder ohne eine Reaktion auf spontane Gefahrensituationen, insbesondere den Notfallkollisionsvermeidungsalgorithmus, zu verlangsamen. Es ist denkbar, dass der Bewegungsprognosealgorithmus und der Wegfindungsalgorithmus zusammen, vorzugsweise nacheinander, ausgeführt werden bzw. einteilig ausgebildet sind. Vorzugsweise werden zum Ausführen des Wegfindungsalgorithmus eine Vielzahl von wahrscheinlichkeitstheoretischen Bewegungsprognosekenngrößen der, insbesondere aller, erfassten externen Objekte herangezogen. Vorzugsweise wird für den Wegfindungsalgorithmus für jedes erfasste externe Objekt die wahrscheinlichkeitstheoretische Bewegungsprognosekenngröße herangezogen, welche jeweils die höchste ermittelte Wahrscheinlichkeit aufweist, dass das jeweilige externe Objekt diese einschlägt. Bevorzugt wird mittels des Wegfindungsalgorithmus eine zukünftige Fortbewegungsstrecke des Geräts innerhalb der Umgebung ermittelt. Insbesondere wird zum Ausführen des Wegfindungsalgorithmus zumindest eine Zielposition und/oder eine optimale Fortbewegungsstrecke des Geräts in/durch die Umgebung vorgegeben, beispielsweise eine schnellste Route des Geräts zu einem Zielort, insbesondere innerhalb eines bekannten Straßennetzes und/oder innerhalb eines bekannten Arbeitsbereichs des Geräts, wie beispielsweise einem Garten, o. dgl. Es ist auch denkbar, dass das Gerät zu einem Ausführen einer Tätigkeit vorgesehen ist, wobei die zukünftige Fortbewegungsstrecke über den Wegfindungsalgorithmus derart ermittelt wird, dass beispielsweise die zukünftige Fortbewegungsstrecke des Geräts eine möglichst große Schnittmenge mit einem zu bearbeitenden Bereich der Umgebung aufweist, beispielsweise bei einer Ausgestaltung des Geräts als ein Rasenmäher. Unter "vorgesehen" soll insbesondere speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Insbesondere ist der Wegfindungsalgorithmus als üblicher zur Steuerung eines teilautonomen oder autonomen bewegbaren Geräts verwendeter wahrscheinlichkeitstheoretischer Steueralgorithmus ausgebildet. Beispielsweise werden über den Bewegungsprognosealgorithmus für alle erfassten externen Objekte jeweils zumindest eine als wahrscheinlichste zukünftige Fortbewegungsstrecke des jeweiligen externen Objekts ausgebildete wahrscheinlichkeitstheoretischen Bewegungsprognosekenngröße ermittelt, wobei mittels des Wegfindungsalgorithmus in Abhängigkeit von den ermittelten wahrscheinlichsten zukünftigen Fortbewegungsstrecken der einzelnen Objekte eine zukünftige Fortbewegungsstrecke des Geräts ermittelt wird. Vorzugsweise wird die zukünftige Fortbewegungsstrecke des Geräts derart ermittelt, dass eine Kollision oder eine Annäherung des Geräts mit einem der externen Objekte verhindert wird. Beispielsweise wird mittels des Wegfindungsalgorithmus die zukünftige Fortbewegungsstrecke des Geräts derart ermittelt, dass das Gerät zu jedem Zeitpunkt einen vorgegebenen Abstandsgrenzwert für einen minimalen Abstand eines externen Objekts und des Geräts nicht unterschreitet. Vorzugsweise wird der vorgegebene Abstandsgrenzwert auf der Steuer- und/oder Regeleinheit, beispielsweise bei einer Montage, einer Inbetriebnahme oder einer Wartung des Geräts, in der Steuer- und/oder Regeleinheit hinterlegt. Alternativ oder zusätzlich ist denkbar, dass die Steuer- und/oder Regeleinheit den zumindest einen vorgegebenen Abstandsgrenzwert periodisch von zumindest einer externen Einheit abfragt. Bevorzugt werden in der Steuer- und/oder Regeleinheit eine Vielzahl von vorgegebenen Abstandsgrenzwerten zu einem Heranziehen für den Wegfindungsalgorithmus hinterlegt. Es ist denkbar, dass in Abhängigkeit von einer Art des jeweiligen betrachteten externen Objekts, von einer momentanen Geschwindigkeit des Geräts und/oder des externen Objekts o.dgl. jeweils genau ein vorgegebener Abstandsgrenzwert für den Wegfindungsalgorithmus ausgewählt wird. Vorzugsweise erfolgt der Wegfindungsalgorithmus zumindest teilweise in einer Kostenfunktionskarte ("costmap"), welche Positionen des Geräts auf einer möglichen Fortbewegungsstrecke des Geräts in einem Nahbereich von externen Objekten zur Ermittlung einer zukünftigen Fortbewegungsstrecke höher gewichtet, wie außerhalb des Nahbereichs. Bevorzugt werden mögliche Fortbewegungsstrecken des Geräts mittels des Wegfindungsalgorithmus zur Ermittlung einer zukünftigen Fortbewegungsstrecke des Geräts in Abhängigkeit von einer Nähe zu zumindest einem externen Objekt zu zumindest einem Zeitpunkt bei einer zukünftigen Bewegung des Geräts entlang der möglichen Fortbewegungsstrecke gewichtet. Alternativ oder zusätzlich ist denkbar, dass zumindest eine über den Bewegungsbestimmungsalgorithmus ermittelte Kurzzeitbewegungskenngröße als Eingangsparameter für den Wegfindungsalgorithmus herangezogen wird.

Ferner wird vorgeschlagen, dass der Bewegungsbestimmungsalgorithmus und/oder der Notfallkollisionsvermeidungsalgorithmus zur Ermittlung einer zukünftigen Fortbewegungsstrecke und/oder der Fortbewegungsrichtung des Geräts in Abhängigkeit von den erfassten externen Objekten in zumindest einem Schritt mit einer höheren Priorität berücksichtigt wird wie der Bewegungsprognosealgorithmus und/oder der Wegfindungsalgorithmus. Es kann eine vorteilhaft hohe Sicherheit bei der Steuerung des Geräts über das Verfahren ermöglicht werden. Insbesondere bei einem Erreichen einer maximalen Rechenleistung der Recheneinheit(en), einer Fehlermeldung der Erfassungseinheit und/oder der Steuer- und/oder Regeleinheit, einer erfassten spontanen Annäherung eines externen Objekts o.dgl., wird der Bewegungsbestimmungsalgorithmus und/oder der Notfallkollisionsvermeidungsalgorithmus mit einer höheren Priorität ausgeführt wie der Bewegungsprognosealgorithmus und/oder der Wegfindungsalgorithmus. Vorzugsweise wird über die Steuer- und/oder Regeleinheit in Abhängigkeit von einem Ausgangsparameter des Wegfindungsalgorithmus zumindest ein Steuersignal an eine Antriebseinheit des Geräts übermittelt, vorzugsweise zu einer Bewegung entlang der ermittelten zukünftigen Fortbewegungsstrecke. Bevorzugt wird über die Steuer- und/oder Regeleinheit in Abhängigkeit von einem Ausgangsparameter des Notfallkollisionsvermeidungsalgorithmus zumindest ein Steuersignal an eine Antriebseinheit des Geräts übermittelt, vorzugsweise zu einem Ausführen der Notfallsteuerung. Besonders bevorzugt wird ein in Abhängigkeit von einem Ausgangsparameter des Notfallkollisionsvermeidungsalgorithmus generiertes Steuersignal mit einer höheren Priorität von der Steuer- und/oder Regeleinheit ausgegeben und/oder von der Antriebseinheit ausgeführt wie ein in Abhängigkeit von einem Ausgangsparameter des Wegfindungsalgorithmus generiertes Steuersignal. Es ist denkbar, dass ein in Abhängigkeit von einem Ausgangsparameter des Notfallkollisionsvermeidungsalgorithmus generiertes Steuersignal ein, insbesondere gleichzeitig oder zuvor übermitteltes, in Abhängigkeit von einem Ausgangsparameter des Wegfindungsalgorithmus generiertes Steuersignal überschreibt und/oder ersetzt. Bevorzugt wird eine Bewegung entlang einer ermittelten zukünftigen Fortbewegungsstrecke über die Antriebseinheit zu einem Ausführen der Notfallsteuerung unterbrochen, falls ein in Abhängigkeit von einem Ausgangsparameter des Notfallkollisionsvermeidungsalgorithmus generiertes Steuersignal an die Antriebseinheit übermittelt wird bzw. von der Antriebseinheit empfangen wird.

Des Weiteren wird vorgeschlagen, dass das Verfahren zumindest einen Schritt, insbesondere den Schritt zum Ausführen des Bewegungsbestimmungsalgorithmus, umfasst, in dem in Abhängigkeit von einer Anzahl und/oder einer Art von verschiedenen erfassten Umgebungsparametern der einzelnen externen Objekte, insbesondere antiproportional, eine, insbesondere von eins verschiedene, Anzahl von Kurzzeitbewegungskenngrößen oder von Werten einer Kurzzeitbewegungskenngröße für das jeweilige externe Objekt ermittelt wird. Es können mögliche Gefahrensituationen bei Unsicherheiten in einer Erfassung eines externen Objekts vorteilhaft kompensiert werden. Beispielsweise können verschiedene Szenarien für eine Bewegung eines externen Objekts innerhalb eines kurzen zukünftigen Zeitintervalls vorteilhaft berücksichtigt werden, falls das externe Objekt, insbesondere eine Bewegung und/oder Position des externen Objekts, nicht ausreichend genau erfasst werden kann. Beispielsweise ist denkbar, dass für einzelne erfasste externe Objekte nur eine begrenzte Anzahl Umgebungsparameter erfasst und/oder ermittelt werden kann. Beispielsweise wird für ein einzelnes erfasstes externes Objekt nur eine Bewegungsrichtung ermittelt, wobei beispielsweise durch störende Effekte bei der Erfassung und/oder durch Fehler jedoch keine Geschwindigkeit des externen Objekts ermittelt werden kann. Dadurch kann insbesondere keine genaue zukünftige Fortbewegungsstrecke innerhalb eines Kurzzeit-Zeitintervalls und/oder kein Kurzzeit-Zeitintervall für das externe Objekt ermittelt werden. Es ist denkbar, dass für einzelne externe Objekte in Abhängigkeit von einem Fehlen von oder von einer Anzahl von fehlenden für eine zukünftige Fortbewegungsstrecke benötigten Umgebungsparametern über den Bewegungsbestimmungsalgorithmus mehr als eine Kurzzeitbewegungskenngröße ermittelt wird. Vorzugsweise werden für den Notfallkollisionsvermeidungsalgorithmus, insbesondere zur Ermittlung eines Bedarfs einer Notfallsteuerung, alle für ein einzelnes erfasstes externes Objekt über den Bewegungsbestimmungsalgorithmus ermittelten Kurzzeitbewegungskenngrößen berücksichtigt.

Zudem wird vorgeschlagen, dass das Verfahren zumindest einen Schritt, insbesondere den Schritt zum Ausführen des Bewegungsbestimmungsalgorithmus, umfasst, in dem zumindest eine Kurzzeitbewegungskenngröße eines erfassten externen Objekts in Abhängigkeit von erfassten Umgebungsparametern des externen Objekts, insbesondere ausschließlich, mittels eines hinterlegten physikalischen Rechenmodells als eine rein-deterministische Größe ermittelt wird. Es kann eine vorteilhaft genaue und sichere Steuerung des Geräts mittels des Bewegungsbestimmungsalgorithmus ermöglicht werden. Vorzugsweise können ungewollte und unnötige Steuerungsmanöver des Geräts, insbesondere in Situationen, wo keine Gefahr einer Kollision mit einem externen Objekt besteht, vorteilhaft verhindert werden. Bevorzugt beschreibt eine Kurzzeitbewegungskenngröße eines einzelnen externen Objekts jeweils eine zukünftige Fortbewegungsstrecke des externen Objekts innerhalb eines Kurzzeit-Zeitintervalls. Bevorzugt werden zur Ermittlung der Kurzzeitbewegungskenngrößen über den Bewegungsbestimmungsalgorithmus ausschließlich erfasste und/oder ermittelte Umgebungsparameter herangezogen und keine wahrscheinlichkeitstheoretischen Parameter, wie beispielsweise eine Wahrscheinlichkeitsverteilung für eine Geschwindigkeit o.dgl. des externen Objekts. Bevorzugt soll unter einem "wahrscheinlichkeitstheoretischen Parameter" ein Parameter verstanden werden, welcher mit einer Unsicherheit von weniger als 90 % ermittelt wird und/oder für welchen mehr als ein Wert ermittelt wird, wobei die einzelnen ermittelten Werte jeweils mit zumindest einer Wahrscheinlichkeit gewichtet werden. Vorzugsweise sind über den Bewegungsbestimmungsalgorithmus ermittelte Kurzzeitbewegungskenngrößen jeweils als zumindest eine, insbesondere über das hinterlegte physikalische Rechenmodell, berechnete zukünftige Position und/oder Fortbewegungsstrecke eines externen Objekts, vorzugsweise innerhalb des Kurzzeit-Zeitintervalls, ausgebildet.

Ferner wird vorgeschlagen, dass das Verfahren zumindest einen Schritt umfasst, in dem eine Gesamtheit von erfassten externen Objekten auf sich bewegende oder bewegbare externe Objekte gefiltert wird, wobei, insbesondere bei einem Ausführen des Bewegungsbestimmungsalgorithmus, zu einer Ermittlung von Kurzzeitbewegungskenngrößen lediglich sich bewegenden oder bewegbaren externen Objekten zugeordnete Umgebungsparameter herangezogen werden. Es kann eine vorteilhaft schnelle Ausführung des Bewegungsbestimmungsalgorithmus ermöglicht werden, insbesondere da eine Anzahl von zu berücksichtigenden Parametern durch die Filterung der externen Objekte reduziert werden kann. Vorzugsweise ist eine Berücksichtigung von nicht-bewegbaren oder sich nicht bewegenden Objekten durch den Bewegungsprognosealgorithmus ausreichend für eine sichere Steuerung des Geräts, weshalb insbesondere die Filterung der externen Objekte für den Bewegungsbestimmungsalgorithmus vorteilhaft ist. Bevorzugt wird für erfasste externe Objekte jeweils eine Position der einzelnen externen Objekte über einen vorgegebenen vergangenen Zeitraum erfasst, wobei jeweils externe Objekte, welche sich innerhalb des vorgegebenen Zeitraums relativ zu dem Gerät und/oder im Raum nicht bewegt haben, zum Ausführen des Bewegungsbestimmungsalgorithmus nicht berücksichtigt werden. Vorzugsweise werden alle erfassten externen Geräte zu einem Heranziehen zum Ausführen des Bewegungsbestimmungsalgorithmus auf sich innerhalb des vorgegebenen Zeitraums bewegende externe Objekte gefiltert. Es ist denkbar, dass der vorgegebene Zeitraum dynamisch in Abhängigkeit von einem minimalen Abstand der einzelnen externen Objekte zu einer Position des Geräts im Raum und/oder auf einer zukünftigen Fortbewegungsstrecke des Geräts bestimmt wird. Beispielsweise wird für externe Objekte in einem Nahbereich des Geräts und/oder einer zukünftigen Fortbewegungsstrecke des Geräts jeweils ein größerer vorgegebener Zeitraum gewählt wie für externe Objekte, welche außerhalb des Nahbereichs des Geräts und/oder einer zukünftigen Fortbewegungsstrecke des Geräts angeordnet sind. Es ist auch denkbar, dass externe Objekte in dem/einem Nahbereich des Geräts und/oder einer zukünftigen Fortbewegungsstrecke des Geräts unabhängig von einer Bewegung dieser externen Objekte im Raum zum Ausführen des Bewegungsbestimmungsalgorithmus berücksichtigt werden. Vorzugsweise werden über die Erfassungseinheit und/oder die Steuer- und/oder Regeleinheit Personen und/oder personengesteuerte Objekte unter den erfassten externen Objekten erkannt und/oder unterschieden. Es ist denkbar, dass in einem Schritt die Gesamtheit von erfassten externen Objekten oder die gefilterten sich bewegenden externen Objekte auf als Personen und/oder personengesteuerte Objekte gefiltert werden/wird, wobei, insbesondere bei einem Ausführen des Bewegungsbestimmungsalgorithmus, zu einer Ermittlung von Kurzzeitbewegungskenngrößen lediglich den gefilterten externen Objekten zugeordnete Umgebungsparameter herangezogen werden. Alternativ oder zusätzlich ist denkbar, dass eine virtuelle Karte einer Geräteumgebung, beispielsweise eines von dem Gerät zu befahrenden Raums oder Gebäudes, eines von dem Gerät zu befahrenden Gartens o.dgl., oder andere Referenzinformationen der Umgebung in der Steuer- und/oder Regeleinheit hinterlegt wird, vorzugsweise durch einen Benutzer, bei einer Inbetriebnahme, bei einer Wartung und/oder während eines Betriebs. Es ist denkbar, dass mittels der Erfassungseinheit und/oder der Steuer- und/oder Regeleinheit, insbesondere zu einer Ermittlung einer Fortbewegungsrichtung und/oder einer zukünftigen Fortbewegungsstrecke des Geräts, lediglich externe Objekte erfasst und/oder ermittelt werden oder Umgebungsparameter für erfasste externe Objekte erfasst und/oder ermittelt werden, welche sich von der hinterlegten virtuellen Karte unterscheiden und/oder nicht in der virtuellen Karte oder den anderen hinterlegten Referenzinformationen der Umgebung umfasst werden. Beispielsweise kann eine Anzahl an beim Ausführen des Bewegungsprognosealgorithmus und/oder des Bewegungsbestimmungsalgorithmus zu berücksichtigenden externen Objekten vorteilhaft reduziert werden, insbesondere da statische Objekte in der Umgebung des Geräts, wie beispielsweise Wände, Bäume, Schränke, Straßenschilder, Gebäude o.dgl., vorteilhaft schnell und einfach aus einer Gruppe an zu berücksichtigenden externen Objekten herausgefiltert werden können. Insbesondere erfolgt eine Erkennung und/oder eine Identifizierung von erfassten externen Objekten, insbesondere zu einem Abgleich mit Objekten der virtuellen Karte oder den anderen hinterlegten Referenzinformationen der Umgebung, über übliche, einem Fachmann bekannte Bildverarbeitungsverfahren bzw. Mustererkennungsverfahren.

Des Weiteren wird vorgeschlagen, dass das Verfahren zumindest einen Schritt umfasst, in dem zumindest eine über den Bewegungsbestimmungsalgorithmus ermittelte Kurzzeitbewegungskenngröße eines externen Objekts zu einer Ermittlung eines Umgebungsparameters des externen Objekts herangezogen wird. Es kann eine vorteilhaft genaue und dynamische Ermittlung der zukünftigen Fortbewegungsstrecke von externen Objekten und/oder des Geräts über den Bewegungsprognosealgorithmus erreicht werden, vorzugsweise ohne eine Verlangsamung eines Ausführens des Bewegungsbestimmungsalgorithmus. Bevorzugt werden über den Bewegungsbestimmungsalgorithmus ermittelte Kurzzeitbewegungskenngrößen in der Steuer- und/oder Regeleinheit hinterlegt. Insbesondere wird zumindest eine hinterlegte Kurzzeitbewegungskenngröße, welche einem externen Objekt zugeordnet sind, zu einer Ermittlung eines Umgebungsparameters des externen Objekts herangezogen. Bevorzugt werden hinterlegte Kurzzeitbewegungskenngrößen, welche jeweils einem externen Objekt zugeordnet sind, als Umgebungsparameter, insbesondere zum Ausführen des Bewegungsbestimmungsalgorithmus und/oder zum Ausführen des Bewegungsprognosealgorithmus, herangezogen. Alternativ ist denkbar, dass hinterlegte Kurzzeitbewegungskenngrößen zusätzlich zu erfassten und/oder ermittelten Umgebungsparametern zum Ausführen des Bewegungsbestimmungsalgorithmus und/oder zum Ausführen des Bewegungsprognosealgorithmus herangezogen werden. Vorzugsweise werden ermittelte und hinterlegte Kurzzeitbewegungskenngrößen eines externen Objekts zu einer Zurückverfolgung einer zurückgelegten Strecke des externen Objekts herangezogen, beispielsweise zur Ermittlung einer Umgebungskenngröße und/oder zu einer Identifizierung des externen Objekts o.dgl.

Zudem wird vorgeschlagen, dass der Bewegungsbestimmungsalgorithmus und der Bewegungsprognosealgorithmus periodisch wiederholt ausgeführt werden, wobei der Bewegungsbestimmungsalgorithmus mit einer höheren Frequenz ausgeführt wird wie der Bewegungsprognosealgorithmus. Es kann eine vorteilhaft hohe Sicherheit bei der, insbesondere autonomen, Steuerung des Geräts erreicht werden. Es ist denkbar, dass eine Frequenz zum Ausführen des Bewegungsprognosealgorithmus dynamisch angepasst wird, beispielsweise in Abhängigkeit von einer Bewegung und/oder Positionen von erfassten externen Objekten, insbesondere relativ zu dem Gerät, von einem Steuerbefehl durch einen Bediener oder durch ein geräteexternes System, von einer Erfassung von neuen, zuvor nicht erfassten externen Objekten o.dgl. Vorzugsweise wird die Frequenz des Bewegungsbestimmungsalgorithmus bei einem Betrieb des Geräts nicht geändert. Vorzugsweise entspricht eine Frequenz eines Ausführens des Bewegungsbestimmungsalgorithmus über die Steuer- und/oder Regeleinheit mindestens 10 Hz, vorzugsweise mindestens 50 Hz und bevorzugt mindestens 100 Hz. Bevorzugt beträgt eine Frequenz eines Ausführens des Bewegungsprognosealgorithmus über die Steuer- und/oder Regeleinheit mindestens 0,5 Hz, vorzugsweise mindestens 1 Hz und bevorzugt mindestens 5 Hz.

Außerdem wird eine Vorrichtung oder ein System mit zumindest einer, insbesondere der vorher genannten, Recheneinheit vorgeschlagen, eingerichtet zu einer Durchführung eines erfindungsgemäßen Verfahrens zu einer Ermittlung einer Fortbewegungsrichtung des Geräts in einer dynamisch veränderlichen Umgebung.

In einer bevorzugten Ausgestaltung der Vorrichtung oder des Systems umfasst das Gerät die Erfassungseinheit und/oder die zumindest eine Steuer- und/oder Regeleinheit. Insbesondere ist die Recheneinheit als Teil der Steuer- und/oder Regeleinheit ausgebildet. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer, insbesondere der vorher genannten, als Prozessor, FPGA, Mikrocontroller o.dgl. ausgebildeten, Recheneinheit und mit einer, insbesondere als physischer Speicher, als virtueller Speicher, als ein Datenspeicher, wie beispielsweise eine Festplatte, ein entnehmbarer Datenträger oder ein Festkörperspeicher, o.dgl. ausgebildete, Speichereinheit sowie mit einem in der Speichereinheit gespeicherten Computerprogramm verstanden werden. Zudem wird vorgeschlagen, dass die Vorrichtung als ein, insbesondere das vorher genannte, teilautonome oder autonome bewegbare Gerät, insbesondere ein Roboter, ausgebildet ist. Beispielsweise ist das Gerät als ein Fahrzeug, als ein Logistikroboter zu einem Transport von Waren und Material, als eine Drohne, beispielsweise eine Überwachungsdrohne, als ein Haushaltsroboter, wie beispielsweise ein Reinigungsroboter, ein Saugroboter o.dgl., als ein Gartenroboter, beispielsweise ein Mähroboter, ein Bewässerungsroboter o.dgl., ausgebildet. Insbesondere ist das Gerät innerhalb der Umgebung bewegbar, bevorzugt fahrbar. Es ist auch denkbar, dass das Gerät schwimmfähig und/oder flugfähig ausgebildet ist. Vorzugsweise ist die Erfassungseinheit zusammen mit dem Gerät bewegbar ausgebildet, insbesondere als Teil des Geräts ausgebildet oder an dem Gerät angeordnet. Es ist auch denkbar, dass die Erfassungseinheit und/oder die Steuer- und/oder Regeleinheit zumindest teilweise geräteextern ausgebildet sind. Beispielsweise ist denkbar, dass das Gerät die Erfassungseinheit umfasst, wobei über die Erfassungseinheit erfasste und/oder ermittelte elektronische Daten, insbesondere zur Ermittlung von Umgebungsparametern, zum Ausführen des Bewegungsprognosealgorithmus und/oder zum Ausführen des Bewegungsbestimmungsalgorithmus, von dem Gerät an die Steuer- und/oder Regeleinheit, insbesondere die/eine Recheneinheit der Steuer- und/oder Regeleinheit, übermittelt werden, vorzugsweise über eine, insbesondere drahtlose, Kommunikationseinheit des Systems. Alternativ ist denkbar, dass die Erfassungseinheit beabstandet von dem Gerät angeordnet ist und dazu vorgesehen ist, die Umgebung des Geräts zu erfassen, wobei insbesondere die Kommunikationseinheit dazu vorgesehen ist, erfasste und/oder ermittelte elektronische Daten, insbesondere zur Ermittlung von Umgebungsparametern, zum Ausführen des Bewegungsprognosealgorithmus und/oder zum Ausführen des Bewegungsbestimmungsalgorithmus, von der Erfassungseinheit an die Steuer- und/oder Regeleinheit, insbesondere die/eine Recheneinheit der Steuer- und/oder Regeleinheit, zu übermitteln. Beispielsweise ist das Gerät oder eine Mehrzahl von Geräten als Teil des Systems ausgebildet. Bevorzugt ist die Steuer- und/oder Regeleinheit zumindest teilweise als Teil des Geräts ausgebildet oder zumindest teilweise an dem Gerät angeordnet, vorzugsweise zu einer Ansteuerung eines Motors des Geräts in Abhängigkeit von Steuersignalen der Recheneinheit. Insbesondere ist denkbar, dass die Recheneinheit zumindest teilweise getrennt von dem Gerät ausgebildet ist, insbesondere als Teil einer anderen Baueinheit des Systems, wie beispielsweise einer Cloud, eines neuronalen Netzes aus einer Vielzahl von Geräten und/oder Vorrichtungen, eines Smart-Home-Systems o.dgl. Die Erfassungseinheit umfasst insbesondere zumindest ein Erfassungselement, beispielsweise eine Kamera, einen Lidar-Sensor, insbesondere mit zumindest einer Laser-Quelle und zumindest einem Lichtsensor. Bevorzugt umfasst das Gerät zumindest eine Antriebseinheit und zumindest ein Fortbewegungsmittel, beispielsweise ein Rad, einen Rotor o.dgl. Bevorzugt ist die Antriebseinheit dazu vorgesehen, das Fortbewegungsmittel in zumindest einer Bewegung anzutreiben. Bevorzugt ist die Steuer- und/oder Regeleinheit dazu eingerichtet, die Antriebseinheit anzusteuern, vorzugsweise zu einem Zurücklegen einer ermittelten zukünftigen Fortbewegungsstrecke und/oder einem Ausführen der Notfallsteuerung. Insbesondere umfasst die Antriebseinheit zumindest ein angetrieben bewegbares Lenkelement zu einer Änderung einer Fortbewegungsrichtung des Geräts.

Vorzugsweise sind/ist die Erfassungseinheit und die Steuer- und/oder Regeleinheit dazu eingerichtet, die das Gerät umgebende Umgebung zu erfassen und in Abhängigkeit von erfassten Daten die externen Objekte und Umgebungsparameter der externen Objekte zu ermitteln. Es ist denkbar, dass über die Steuer- und/oder Regeleinheit ein Mapping-Prozess der Umgebung und der darin erfassten externen Objekte erfolgt, wobei beispielsweise eine virtuelle Karte der Umgebung erstellt wird. Bevorzugt sind/ist die Erfassungseinheit und die Steuer- und/oder Regeleinheit dazu eingerichtet, erfasste externe Objekte zu identifizieren und/oder in Untergruppen einzuordnen. Bevorzugt sind/ist die Erfassungseinheit und die Steuer- und/oder Regeleinheit dazu eingerichtet, Personen und/oder von Personen gesteuerte Objekte, wie beispielsweise Fahrräder, Kraftfahrzeuge o.dgl., zu erkennen und zu unterscheiden. Bevorzugt sind/ist die Steuer- und/oder Regeleinheit und/oder die Recheneinheit dazu eingerichtet, den Bewegungsprognosealgorithmus und den Bewegungsbestimmungsalgorithmus, bevorzugt unabhängig voneinander, auszuführen. Vorzugsweise sind/ist die Steuer- und/oder Regeleinheit und/oder die Recheneinheit dazu eingerichtet, den Notfallkollisionsvermeidungsalgorithmus und/oder den Wegfindungsalgorithmus, bevorzugt unabhängig voneinander, auszuführen.

Durch die erfindungsgemäße Ausgestaltung der Vorrichtung oder des Systems kann eine vorteilhaft schnelle, genaue und sichere, insbesondere autonome, Steuerung erreicht werden, insbesondere in Gefahrensituationen, wo Bewegungen von externen Objekten relativ zu dem Gerät direkt und unausweichlich das Gerät gefährden. Es kann eine vorteilhaft schnelle Reaktion auf spontane Ereignisse in der Umgebung des Geräts ermöglicht werden, vorzugsweise da dazu relevante Informationen über die Kurzzeitbewegungskenngröße separat ermittelbar sind. Es kann ein vorteilhaft geringer Rechenaufwand zum Ausführen des Bewegungsbestimmungsalgorithmus und damit auch ein vorteilhaft schnelles Ausführen einzelner Durchläufe des Bewegungsbestimmungsalgorithmus ermöglicht werden, insbesondere da wahrscheinlichkeitstheoretische Betrachtungen von externen Objekten unabhängig von einer Ermittlung der Kurzzeitbewegungskenngrößen erfolgen kann.

Weiter wird ein, insbesondere das vorher genannte, Computerprogramm, umfassend Befehle, die bei der Ausführung des Programms durch einen Computer diesen veranlassen, das erfindungsgemäße Verfahren auszuführen, vorgeschlagen.

Durch die erfindungsgemäße Ausgestaltung des Computerprogramms kann eine vorteilhaft schnelle, genaue und sichere Steuerung eines zumindest teilautonomen, insbesondere autonom gesteuerten, Geräts erreicht werden, insbesondere in Gefahrensituationen, wo Bewegungen von externen Objekten relativ zu dem Gerät direkt und unausweichlich das Gerät gefährden. Es kann eine vorteilhaft schnelle Reaktion des Geräts auf spontane Ereignisse in der Umgebung des Geräts ermöglicht werden, vorzugsweise da dazu relevante Informationen über die Kurzzeitbewegungskenngröße separat ermittelbar sind. Es kann ein vorteilhaft geringer Rechenaufwand zum Ausführen des Bewegungsbestimmungsalgorithmus und damit auch ein vorteilhaft schnelles Ausführen einzelner Durchläufe des Bewegungsbestimmungsalgorithmus ermöglicht werden, insbesondere da wahrscheinlichkeitstheoretische Betrachtungen von externen Objekten unabhängig von einer Ermittlung der Kurzzeitbewegungskenngrößen erfolgen kann. Es kann ein Ausführen des Verfahrens auf verschiedenen üblichen Recheneinheiten ermöglicht werden.

Ferner wird ein computerlesbares Medium, umfassend Befehle, die bei der Ausführung durch einen Computer diesen veranlassen, das erfindungsgemäße Verfahren auszuführen, vorgeschlagen. Insbesondere umfasst das Medium die vorher genannte Speichereinheit.

Durch die erfindungsgemäße Ausgestaltung des Mediums kann eine vorteilhaft schnelle, genaue und sichere Steuerung eines zumindest teilautonomen, insbesondere autonom gesteuerten, Geräts erreicht werden, insbesondere in Gefahrensituationen, wo Bewegungen von externen Objekten relativ zu dem Gerät direkt und unausweichlich das Gerät gefährden. Es kann eine vorteilhaft schnelle Reaktion des Geräts auf spontane Ereignisse in der Umgebung des Geräts ermöglicht werden, vorzugsweise da dazu relevante Informationen über die Kurzzeitbewegungskenngröße separat ermittelbar sind. Es kann ein vorteilhaft geringer Rechenaufwand zum Ausführen des Bewegungsbestimmungsalgorithmus und damit auch ein vorteilhaft schnelles Ausführen einzelner Durchläufe des Bewegungsbestimmungsalgorithmus ermöglicht werden, insbesondere da wahrscheinlichkeitstheoretische Betrachtungen von externen Objekten unabhängig von einer Ermittlung der Kurzzeitbewegungskenngrößen erfolgen kann.

Das erfindungsgemäße Verfahren und/oder die/das erfindungsgemäße Vorrichtung oder System sollen/soll hierbei nicht auf die oben beschriebene Anwendung und Ausführungsform beschränkt sein. Insbesondere können/kann das erfindungsgemäße Verfahren und/oder die/das erfindungsgemäße Vorrichtung oder System zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Systems, welche ein teilautonomes bewegbares Gerät umfasst, zu einer Durchführung eines erfindungsgemäßen Verfahrens zur Steuerung des Geräts in einer dynamisch veränderlichen Umgebung,
- Fig. 2: eine Prinzipskizze des erfindungsgemäßen Verfahrens zur Steuerung des erfindungsgemäßen Geräts und
- Fig. 3: eine schematische Darstellung eines beispielhaften Ablaufs des erfindungsgemäßen Verfahrens.

### Beschreibung des Ausführungsbeispiels

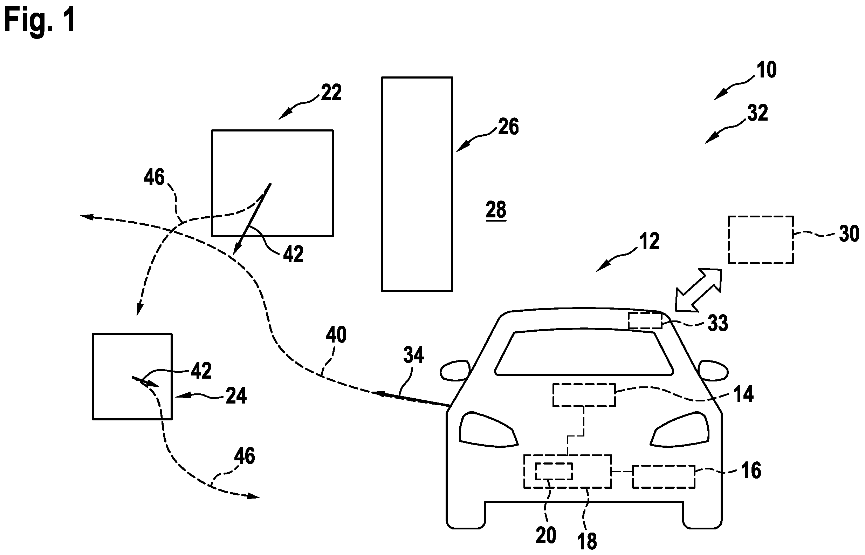

In Figur 1 ist eine schematische Darstellung eines Systems 10 mit zumindest einer als ein autonomes bewegbares Gerät 12, insbesondere ein autonomes Fahrzeug, ausgebildeten Vorrichtung bei einer Bewegung des Geräts 12 in einer dynamisch veränderlichen Umgebung 28 gezeigt. Das Gerät 12 umfasst eine Erfassungseinheit 14, eine Antriebseinheit 16 und eine Steuer- und/oder Regeleinheit 18. Das Gerät 12/die Vorrichtung ist zu einer Durchführung eines Verfahrens 19 zu einer Ermittlung einer Fortbewegungsrichtung und/oder einer Fortbewegungsstrecke des Geräts 12 in der dynamisch veränderlichen Umgebung 28 vorgesehen. Insbesondere umfasst die Steuer- und/oder Regeleinheit 18 eine Recheneinheit 20, die insbesondere als Teil des Systems 10 ausgebildet ist. In der Umgebung 28 des Systems 10, insbesondere des Geräts 12 bzw. der Vorrichtung, sind eine Vielzahl externer Objekte 22, 24, 26 angeordnet, welche sich innerhalb der Umgebung 28 bewegen oder statisch angeordnet sind. Insbesondere bewegt sich das Gerät 12 relativ zu den externen Objekten 22, 24, 26. In Figur 1 sind beispielhaft zwei sich bewegende externe Objekte 22, 24 und ein statisches externes Objekt 26 gezeigt. Vorzugsweise ist die Erfassungseinheit 14 dazu vorgesehen, die externen Objekte 22, 24, 26 in der Umgebung 28 zu erfassen. Insbesondere umfasst die Erfassungseinheit 14 eine Kamera und ein Lidar-System (in Figuren nicht einzeln gezeigt). Es ist denkbar, dass das System 10, insbesondere die Steuer- und/oder Regeleinheit 18, alternativ zu der Recheneinheit 20, welche als Teil des Geräts 12 ausgebildet ist, eine geräteexterne Recheneinheit 30 umfasst, welche beispielsweise als Teil eines Netzwerks, als ein Smart-Home-System, als eine Cloud o.dgl. ausgebildet ist. Insbesondere umfasst das System 10 eine Kommunikationseinheit 32 zu einer drahtlosen Kommunikation mit der geräteexternen Recheneinheit 30, mit anderen Geräten oder Vorrichtungen des Systems 10 und/oder mit externen Einheiten. Vorzugsweise umfasst die Kommunikationseinheit 32 zumindest ein Kommunikationselement 33, welches als Teil des Geräts 12 ausgebildet ist oder an dem Gerät 12 angeordnet ist. Es sind auch andere Ausgestaltungen des Systems 10, insbesondere des Geräts 12 und/oder der Erfassungseinheit 14, denkbar. Beispielsweise ist denkbar, dass das Gerät 12/die Vorrichtung als ein teilautonom oder vollautonom bewegbarer Arbeitsroboter, wie beispielsweise ein Saugroboter, ein Mähroboter o.dgl., ausgebildet ist. Zudem ist denkbar, dass das System 10 mehr als eine Vorrichtung bzw. mehr als ein autonom bewegbares Gerät 12 umfasst. Alternativ oder zusätzlich ist denkbar, dass die Erfassungseinheit 14 getrennt von dem Gerät 12 ausgebildet ist. In einer alternativen beispielhaften Ausgestaltung des Systems 10 ist die Vorrichtung als ein Roboter ausgebildet, welcher sich in der Umgebung 28 bewegt, wobei die Erfassungseinheit 14 in oder an einem Arbeitsbereich des Roboters angeordnet ist und vorzugsweise dazu vorgesehen ist, den Roboter sowie externe Objekte 22, 24, 26 in einer Umgebung 28 des Roboters zu erfassen.

Die Erfassungseinheit 14 ist dazu vorgesehen, Umgebungsparameter von erfassten externen Objekten 22, 24, 26 zu erfassen. Beispielsweise sind über die Erfassungseinheit 14 erfasste Umgebungsparameter der externen Objekte 22, 24, 26 als eine Position eines externen Objekts 22, 24, 26 im Raum, als ein Abstand eines externen Objekts 22, 24, 26 zur Erfassungseinheit 14, o.dgl. ausgebildet. Die Steuer- und/oder Regeleinheit 18 ist dazu eingerichtet, in Abhängigkeit von über die Erfassungseinheit 14 erfassten Daten der externen Objekte 22, 24, 26 Umgebungsparameter der externen Objekte 22, 24, 26 zu ermitteln. Beispielsweise sind über die Steuer- und/oder Regeleinheit 18 ermittelte Umgebungsparameter der externen Objekte 22, 24, 26 als eine Geschwindigkeit eines externen Objekts 22, 24, 26, als eine Bewegungsrichtung eines externen Objekts 22, 24, 26, o.dgl. ausgebildet. Vorzugsweise werden mittels der Steuer- und/oder Regeleinheit 18 Umgebungsparameter ermittelt, welche jeweils über mehr als ein über die Erfassungseinheit 14 aufgenommenes Bild und/oder Szene ermittelt werden.

In Figur 1 sind beispielhaft die drei verschiedenen externen Objekte 22, 24, 26 in der Umgebung 28 des Geräts 12 gezeigt. Ein erstes externes Objekt 22 der drei externen Objekte 26 ist als ein stationäres Objekt ausgebildet, wobei keine Bewegung des ersten externen Objekts 26 erfasst wird. Ein zweites externes Objekt 22 der drei externen Objekte 22, 24, 26 bewegt sich relativ zu dem Gerät 12 und relativ zu der Umgebung 28. Beispielsweise werden für das zweite externe Objekt 22 über die Erfassungseinheit 14 und die Steuer- und/oder Regeleinheit 18 eine Bewegungsrichtung 34 und eine Geschwindigkeit als Umgebungsparameter ermittelt. Zusätzlich ist denkbar, dass für das zweite externe Objekt 22 über die Erfassungseinheit 14 und die Steuer- und/oder Regeleinheit 18 zusätzlich eine Art des externen Objekts 22 und/oder weitere Zusatzinformationen des zweiten externen Objekts 22 ermittelt wird/werden. Es ist denkbar, dass, insbesondere über die externe Recheneinheit 30 und/oder eine externe Einheit, durch einen Vergleich von erfassten Daten mit zumindest einem Datensatz ein Fahrzeugmodell, eine Identität einer Person o.dgl. als Zusatzinformation eines externen Objekts identifiziert wird. Beispielsweise ist denkbar, dass das zweite externe Objekt 22 als ein Fahrzeug mit einem bestimmten Fahrzeugmodell erkannt wird, wobei über eine Identifizierung des Fahrzeugmodells zusätzliche Informationen, wie Leergewicht, Höchstgeschwindigkeit o.dgl. als zusätzliche Umgebungsparameter ermittelt werden. Ein drittes externes Objekt 24 der drei externen Objekte 22, 24, 26 bewegt sich relativ zu dem Gerät 12 und relativ zu der Umgebung 28 und ist beispielsweise als ein Fußgänger ausgebildet.

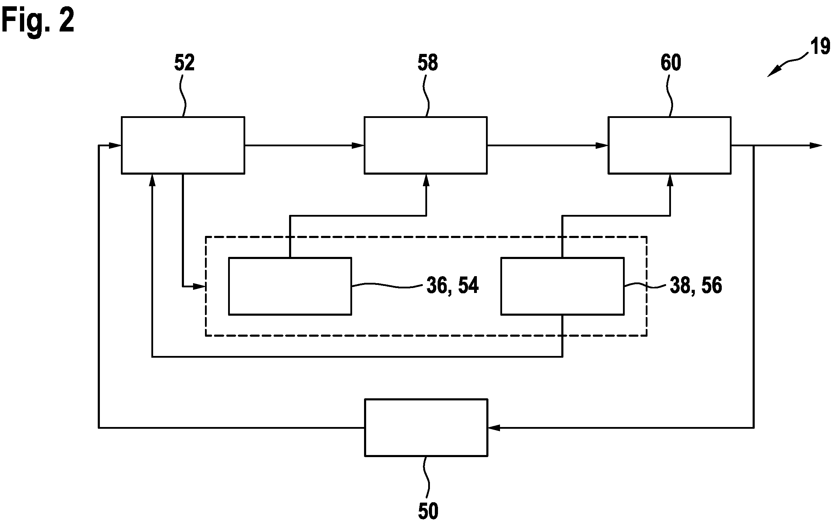

Die Steuer- und/oder Regeleinheit 18, insbesondere die Recheneinheit 20, ist dazu eingerichtet, einen Bewegungsprognosealgorithmus 36 (vgl. Figur 2) zu einer Ermittlung von jeweils zumindest einer wahrscheinlichkeitstheoretischen Bewegungsprognosekenngröße für erfasste externe Objekte 22, 24, 26 in Abhängigkeit von den einzelnen externen Objekten 22, 24, 26 zugeordneten erfassten Umgebungsparametern auszuführen. Die Steuer- und/oder Regeleinheit 18, insbesondere die Recheneinheit 20, ist dazu eingerichtet, einen Bewegungsbestimmungsalgorithmus 38 (vgl. Figur 2) zu einer Ermittlung von jeweils zumindest einer Kurzzeitbewegungskenngröße für erfasste externe Objekte 22, 24, 26 in Abhängigkeit von den einzelnen externen Objekten 22, 24, 26 zugeordneten erfassten Umgebungsparametern auszuführen. Die Steuer- und/oder Regeleinheit 18, insbesondere die Recheneinheit 20, ist dazu eingerichtet, den Bewegungsprognosealgorithmus 36 und den Bewegungsbestimmungsalgorithmus 38 zu einer Ermittlung einer zukünftigen Fortbewegungsrichtung bzw. einer zukünftigen Fortbewegungsstrecke 40 des Geräts 12 zumindest im Wesentlichen unabhängig voneinander auszuführen. Der Bewegungsbestimmungsalgorithmus 38 wird mittels der Steuer- und/oder Regeleinheit 18, insbesondere der Recheneinheit 20, zur Ermittlung der zukünftigen Fortbewegungsstrecke 40 und/oder Fortbewegungsrichtung des Geräts 12 in Abhängigkeit von den erfassten externen Objekten 22, 24, 26 in zumindest einem Schritt mit einer höheren Priorität berücksichtigt wird wie der Bewegungsprognosealgorithmus 36.

Bevorzugt ist die Steuer- und/oder Regeleinheit 18, insbesondere die Recheneinheit 20, dazu eingerichtet, mittels des Bewegungsbestimmungsalgorithmus 38 über ein physikalisches Rechenmodell die Kurzzeitbewegungskenngröße(n) als eine rein-deterministische Größe zu ermitteln. Bevorzugt ist die Steuer- und/oder Regeleinheit 18, insbesondere die Recheneinheit 20, dazu eingerichtet, sich bewegende erfasste externe Objekte 22, 24, 26 aus den erfassten externen Objekten 22, 24, 26 zu filtern, wobei lediglich sich relativ zu der Umgebung 28 bewegende externe Objekte 22, 24 zur Berücksichtigung im Bewegungsbestimmungsalgorithmus 38 ausgewählt werden. Beispielsweise würde dabei das erste externe Objekt 26, da es stationär ausgebildet ist, nicht für den Bewegungsbestimmungsalgorithmus 38 berücksichtigt werden. Es ist aber auch denkbar, dass alle erfassten externen Objekte 22, 24, 26 für den Bewegungsbestimmungsalgorithmus 38 berücksichtigt werden. Für das zweite externe Objekt 22 und das dritte externe Objekt 24 werden über den Bewegungsbestimmungsalgorithmus 38 jeweils eine Kurzzeitbewegungskenngröße ermittelt, welche vorzugsweise jeweils einer Fortbewegungsstrecke 42, 44 des jeweiligen externen Objekts 22, 24 entsprechen, welche das jeweilige externe Objekt 22, 24, insbesondere unabhängig von Lenkeinschlägen o.dgl., innerhalb eines darauffolgenden Kurzzeit-Zeitintervalls zurücklegt. Für den Bewegungsprognosealgorithmus 36 werden alle erfassten externen Objekte 22, 24, 26 berücksichtigt, wobei für jedes erfasste externe Objekt 22, 24, 26 jeweils zumindest eine wahrscheinlichkeitstheoretische Bewegungsprognosekenngröße, insbesondere eine Mehrzahl von wahrscheinlichkeitstheoretischen Bewegungsprognosekenngrößen, ermittelt wird. Bevorzugt sind die wahrscheinlichkeitstheoretischen Bewegungsprognosekenngrößen jeweils als ein möglicher zeitlicher Verlauf 46, 48 (in Figur 1 beispielhaft als Fortbewegungsstrecken gezeigt) einer zukünftigen Position des jeweiligen externen Objekts 22, 24, 26 ausgebildet, insbesondere in einem über ein Kurzzeit-Zeitintervall hinausgehenden Zeitraum. Es ist denkbar, dass die wahrscheinlichkeitstheoretischen Bewegungsprognosekenngrößen mittels des Bewegungsprognosealgorithmus 36 in Abhängigkeit von bekannten Verhaltensmustern, hinterlegten Verkehrsregeln o.dgl. ermittelt werden. Alternativ oder zusätzlich ist denkbar, dass die wahrscheinlichkeitstheoretischen Bewegungsprognosekenngrößen mittels dem Bewegungsprognosealgorithmus 36 in Abhängigkeit von mit dem jeweiligen externen Objekt 22, 24, 26 ausgetauschten elektronischen Daten ermittelt werden, beispielsweise falls das jeweilige externe Objekt 22, 24, 26 als ein anderes vernetztes und/oder autonomes/teilautonomes Gerät ausgebildet ist. Vorzugsweise sind die ermittelten Kurzzeitbewegungskenngrößen zu einer Beschreibung einer zukünftigen Bewegung eines externen Objekts 22, 24, 26 in einem Kurzzeit-Zeitintervall vorgesehen. Bevorzugt ist/sind die ermittelte(n) wahrscheinlichkeitstheoretische(n) Bewegungsprognosekenngröße(n) zu einer wahrscheinlichkeitsbasierten Wegfindung für die Vorrichtung/das Gerät 12 in der Umgebung 28 vorgesehen, wobei insbesondere mögliche zukünftige Fortbewegungsstrecken von externen Objekten 22, 24, 26 bzw. die möglichen zeitlichen Verläufe 46, 48 einer zukünftigen Position der externen Objekte 22, 24 berücksichtigt werden.

In Figur 2 ist eine Prinzipskizze des Verfahrens 19 gezeigt. In einem Schritt 50 werden die Umgebung 28 sowie die externen Objekte 22, 24, 26 in der Umgebung 28 erfasst. Zudem werden Bewegungskenngrößen des Geräts 12, beispielsweise eine Geschwindigkeit, eine Bewegungsrichtung, eine Beschleunigung o.dgl. erfasst. In einem Schritt, insbesondere dem Schritt 50, werden die Umgebungsparameter der externen Objekte 22, 24, 26 ermittelt und an die Steuer- und/oder Regeleinheit 18 übertragen. Es ist auch denkbar, dass die Umgebungsparameter, insbesondere über von der Erfassungseinheit 14 erfasste Daten, zumindest teilweise oder vollständig über die Steuer- und/oder Regeleinheit 18 ermittelt werden. In einem weiteren Schritt 52 werden vorzugsweise sich bewegende externe Objekte 22, 24 und relativ zur Umgebung 28 stationäre externe Objekte 26 unterschieden. Erfasste und/oder ermittelte Umgebungsparameter werden an die Recheneinheit 18 übertragen, welche den Bewegungsprognosealgorithmus 36 und den Bewegungsbestimmungsalgorithmus 38 unabhängig voneinander, insbesondere in zwei weiteren Schritten 54, 56, ausführt. Es ist denkbar, dass für den Bewegungsbestimmungsalgorithmus 38, vorzugsweise in Schritt 56, lediglich sich relativ zur Umgebung 28 bewegende externe Objekte 22, 24 ausgewählt werden. Es ist denkbar, dass für den Bewegungsprognosealgorithmus 36, vorzugsweise in Schritt 54, alle erfassten externen Objekte 22, 24, 26 ausgewählt werden. In einem weiteren Schritt 58 wird in Abhängigkeit von den über den Bewegungsprognosealgorithmus 36 ermittelten wahrscheinlichkeitstheoretischen Bewegungsprognosekenngrößen für erfasste externe Objekte 22, 24, 26 und in Abhängigkeit von erfassten und/oder ermittelten Umgebungsparameters mittels eines Wegfindungsalgorithmus 64 jeweils zumindest eine mögliche zukünftige Fortbewegungsstrecke 40, insbesondere jeweils eine Mehrzahl von möglichen zukünftigen Fortbewegungsstrecken 40, des Geräts 12 ermittelt. Insbesondere wird, insbesondere in dem weiteren Schritt 58, in Abhängigkeit von den ermittelten wahrscheinlichkeitstheoretischen Bewegungsprognosekenngrößen, insbesondere ermittelten möglichen zukünftigen Fortbewegungsstrecken 42, 44, der externen Objekte 22, 24, 26 zumindest eine zukünftige Fortbewegungsstrecke 40 des Geräts 12/der Vorrichtung ermittelt, beispielsweise über eine zweidimensionale Kostenkarte ("cost map") bzw. eine Theta*-Planungsfunktion. In einem weiteren Schritt 60 erfolgt eine Steuerung des Geräts 12/der Vorrichtung, insbesondere über eine Modellprädiktive Regelung (MPC). Vorzugsweise erfolgt die Steuerung des Geräts 12/der Vorrichtung mittels der Steuer- und/oder Regeleinheit 18 in Abhängigkeit von der zumindest einen ermittelten zukünftigen Fortbewegungsstrecke 40 des Geräts 12/der Vorrichtung. In dem Schritt 60 erfolgt ein Ausführen eines Notfallkollisionsvermeidungsalgorithmus 62, wobei eine Notfallsteuerung 66, insbesondere eine Notfallbremsung und/oder eine Ausweichbewegung, des Geräts 12 (siehe Figur 1, beispielhaft als Ausweichmanöver durch Lenkeinschlag gezeigt) erfolgt, falls ein, insbesondere virtueller, Abstand einer Position des Geräts 12 auf der zukünftigen Fortbewegungsstrecke 40 des Geräts 12 und einer in Abhängigkeit von einer ermittelten Kurzzeitbewegungskenngröße eines externen Objekts 22, 24, 26 ermittelten zukünftigen Position des externen Objekts 22, 24, 26 zu zumindest einem Zeitpunkt einen vorgegebenen Grenzwert unterschreitet. Insbesondere wird der Notfallkollisionsvermeidungsalgorithmus 62 mit einer höheren Priorität ausgeführt wie die Steuerung des Geräts 12/der Vorrichtung in Abhängigkeit von der ermittelten möglichen zukünftigen Fortbewegungsstrecke 40, wobei beispielsweise die Notfallsteuerung 66, insbesondere eine Notfallbremsung und/oder eine Ausweichbewegung, eine ursprünglich geplante Bewegung und/oder ein ursprünglich geplanter Lenkeinschlag ersetzt bzw. vor diesem/diesen ausgeführt wird. Vorzugsweise wird eine Steuerung und/oder eine Notfallsteuerung 66, insbesondere eine Notfallbremsung und/oder eine Ausweichbewegung, des Geräts 12 bei einer weiteren Erfassung der Umgebung 28 bzw. einer Bewegungskenngröße des Geräts 12 berücksichtigt. Insbesondere erfolgt eine Erfassung der Umgebung 28 und/oder der externen Objekte 22, 24, 26 über die Erfassungseinheit 14 kontinuierlich. Der Notfallkollisionsvermeidungsalgorithmus 62, insbesondere die Notfallsteuerung 66, ist zu einer direkten Vermeidung von Kollisionen der Vorrichtung/des Geräts 12 mit externen Objekten 22, 24, 26 vorgesehen.

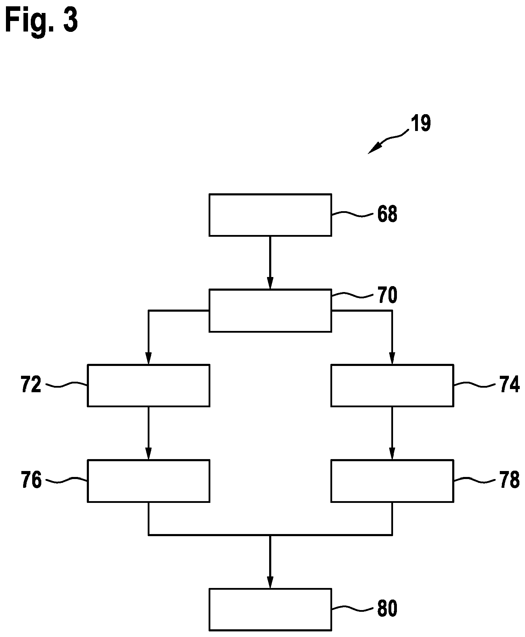

In Figur 3 ist schematisch ein beispielhafter Ablauf des Verfahrens 19 zu einer Ermittlung einer Fortbewegungsrichtung und/oder einer zukünftigen Fortbewegungsstrecke des zumindest teilautonomen oder autonomen bewegbaren Geräts 12 in der dynamisch veränderlichen Umgebung 28 gezeigt. In einem Verfahrensschritt 68 des Verfahrens 19 werden mittels der Erfassungseinheit 14 die externen Objekte 22, 24, 28 und Umgebungsparameter der externen Objekte 22, 24, 26 erfasst. In einem Verfahrensschritt des Verfahrens 19, insbesondere dem Verfahrensschritt 68 oder einem diesem folgenden weiteren Verfahrensschritt, werden alternativ oder zusätzlich mittels der Steuer- und/oder Regeleinheit 18 Umgebungsparameter von erfassten externen Objekten 22, 24, 26 teilweise oder vollständig in Abhängigkeit von über die Erfassungseinheit 14 erfassten Daten der externen Objekte 22, 24, 26 ermittelt. Insbesondere sind die Umgebungsparameter jeweils zumindest einem sich relativ zu dem Gerät 12 bewegenden externen Objekt 22, 24, 26 in der das Gerät 12 umgebenden Umgebung 28 zuordenbar. In einem Verfahrensschritt des Verfahrens 19, insbesondere dem Verfahrensschritt 68, wird zumindest eine Bewegungskenngröße des Geräts 12 erfasst, welche insbesondere eine momentane Bewegung des Geräts 12 in der Umgebung 28 bzw. im Raum beschreibt. Es ist denkbar, dass die Bewegungskenngröße(n) des Geräts 12 mittels der Erfassungseinheit 14 und/oder mittels der Steuer- und/oder Regeleinheit 18, beispielsweise über die Antriebseinheit 16 des Geräts 12, erfasst wird/werden.

In einem weiteren Verfahrensschritt 70 des Verfahrens 19 wird eine Gesamtheit von erfassten externen Objekten 22, 24, 26 auf sich bewegende oder bewegbare externe Objekte 22, 24, 26 gefiltert, wobei, insbesondere bei einem, insbesondere später erfolgenden, Ausführen des Bewegungsbestimmungsalgorithmus 38, zu einer Ermittlung von Kurzzeitbewegungskenngrößen lediglich sich relativ zur Umgebung 28 bewegenden und/oder bewegbaren externen Objekten 22, 24 zugeordnete Umgebungsparameter herangezogen werden. Alternativ ist denkbar, dass alle erfassten externen Objekte 22, 24, 26 für den Bewegungsbestimmungsalgorithmus 38 berücksichtigt werden.

In einem weiteren Verfahrensschritt 72 des Verfahrens 19 wird, insbesondere mittels der Recheneinheit 20, der Bewegungsprognosealgorithmus 36 zu einer Ermittlung von jeweils zumindest einer wahrscheinlichkeitstheoretischen Bewegungsprognosekenngröße für erfasste externe Objekte 22, 24, 26 in Abhängigkeit von den einzelnen externen Objekten 22, 24, 26 zugeordneten erfassten Umgebungsparametern ausgeführt. In einem weiteren Verfahrensschritt 74 des Verfahrens 19 wird, insbesondere mittels der Recheneinheit 20, der Bewegungsbestimmungsalgorithmus 38 zu einer Ermittlung von jeweils zumindest einer Kurzzeitbewegungskenngröße für erfasste externe Objekte 22, 24, 26 in Abhängigkeit von den einzelnen externen Objekten 22, 24, 26 zugeordneten erfassten Umgebungsparametern ausgeführt. Der Bewegungsprognosealgorithmus 36 und der Bewegungsbestimmungsalgorithmus 38 werden zu einer Ermittlung einer zukünftigen Fortbewegungsrichtung und/oder einer zukünftigen Fortbewegungsstrecke des Geräts 12 zumindest im Wesentlichen unabhängig voneinander ausgeführt. Der Bewegungsbestimmungsalgorithmus 38 wird zur Ermittlung der zukünftigen Fortbewegungsstrecke und/oder der zukünftigen Fortbewegungsrichtung des Geräts 12 in Abhängigkeit von den erfassten externen Objekten 22, 24, 26 mit einer höheren Priorität berücksichtigt wie der Bewegungsprognosealgorithmus 36. In einem Verfahrensschritt des Verfahrens 19, insbesondere dem Verfahrensschritt 74, wird in Abhängigkeit von einer Anzahl und/oder einer Art von verschiedenen erfassten Umgebungsparametern der einzelnen externen Objekte 22, 24, 26, insbesondere antiproportional, eine Anzahl von Kurzzeitbewegungskenngrößen oder von Werten einer Kurzzeitbewegungskenngröße für das jeweilige externe Objekt 22, 24, 26 ermittelt. In einem Verfahrensschritt des Verfahrens 19, insbesondere dem Verfahrensschritt 74, wird zumindest eine Kurzzeitbewegungskenngröße eines der erfassten externen Objekte 22, 24, 26 in Abhängigkeit von erfassten Umgebungsparametern des jeweiligen externen Objekts 22, 24, 26, insbesondere ausschließlich, mittels eines hinterlegten physikalischen Rechenmodells als eine rein-deterministische Größe ermittelt. Vorzugsweise werden alle über den Bewegungsbestimmungsalgorithmus 38 ermittelten Kurzzeitbewegungskenngrößen ausschließlich mittels des hinterlegten physikalischen Rechenmodells als rein-deterministische Größen ermittelt.

In einem weiteren Verfahrensschritt 76 des Verfahrens 19 wird der Wegfindungsalgorithmus 64, insbesondere ein Theta*-Wegfindungs-Algorithmus, ausgeführt, wobei eine, insbesondere mögliche, zukünftige Fortbewegungsstrecke des Geräts 12 mittels des Wegfindungsalgorithmus 64 in Abhängigkeit von den ermittelten wahrscheinlichkeitstheoretischen Bewegungsprognosekenngrößen der erfassten externen Objekte 22, 24, 26 dynamisch bestimmt wird.

In einem weiteren Verfahrensschritt 78 des Verfahrens 19 wird, insbesondere mittels der Steuer- und/oder Regeleinheit 18, der Notfallkollisionsvermeidungsalgorithmus 62 ausgeführt, welcher insbesondere als Teil einer modellprädiktiven Regelung des Geräts 12 ausgebildet ist, wobei mittels des Notfallkollisionsvermeidungsalgorithmus 62 eine Notfallsteuerung, insbesondere eine Notfallbremsung und/oder eine Ausweichbewegung, des Geräts 12 erfolgt, falls ein, insbesondere virtueller, Abstand einer Position des Geräts 12 auf der zukünftigen Fortbewegungsstrecke des Geräts 12 und einer in Abhängigkeit von einer ermittelten Kurzzeitbewegungskenngröße ermittelten zukünftigen Position eines externen Objekts 22, 24, 26 zu zumindest einem Zeitpunkt einen vorgegebenen Grenzwert unterschreitet. Beispielsweise wird ein externes Objekt 22 (siehe Figur 1) ermittelt, welches in einem direkt anschließenden Kurzzeit-Zeitintervall mit dem Gerät 12 kollidieren würde oder mit einer hohen Wahrscheinlichkeit könnte. Vorzugsweise wird über den Notfallkollisionsvermeidungsalgorithmus 62 eine, insbesondere die vorher genannte, Notfallsteuerung 66 ermittelt, durch die das Gerät 12 die Kollision mit dem externen Objekt 22, insbesondere zumindest mit einer gewissen Wahrscheinlichkeit, verhindern kann. Beispielsweise ist die Notfallsteuerung 66 dabei als ein Lenkeinschlag des Geräts 12 um einen gewissen Winkel sowie eine zeitgleiche Bremsung um einen gewissen Betrag ausgebildet. In einem Verfahrensschritt des Verfahrens 19, insbesondere dem Verfahrensschritt 78, wird eine zukünftige Fortbewegungsstrecke des Geräts 12 ermittelt, wobei insbesondere die Notfallsteuerung 66, welche in Abhängigkeit von Ausgabesignalen des Bewegungsbestimmungsalgorithmus 38 erfolgt, zur Ermittlung der zukünftigen Fortbewegungsstrecke und/oder Fortbewegungsrichtung des Geräts 12 in Abhängigkeit von den erfassten externen Objekten 22, 24, 26 mit einer höheren Priorität berücksichtigt wird wie die über den Wegfindungsalgorithmus 64, und/oder in Abhängigkeit von Ausgabesignalen des Bewegungsprognosealgorithmus 36 ermittelte mögliche zukünftige Fortbewegungsstrecke des Geräts 12. Es ist denkbar, dass in zumindest einem Verfahrensschritt des Verfahrens 19, beispielsweise dem Verfahrensschritt 80, zumindest eine über den Bewegungsbestimmungsalgorithmus 38 ermittelte Kurzzeitbewegungskenngröße eines externen Objekts 22, 24, 26, insbesondere in einer zukünftigen Iteration des Verfahrens 19, beispielsweise zu einer Ermittlung eines Umgebungsparameters des jeweiligen externen Objekts 22, 24, 26, herangezogen wird. Der Bewegungsbestimmungsalgorithmus 38 und der Bewegungsprognosealgorithmus 36 werden periodisch wiederholt ausgeführt, wobei der Bewegungsbestimmungsalgorithmus 38 mit einer höheren Frequenz ausgeführt wird wie der Bewegungsprognosealgorithmus 36. Bevorzugt werden der Wegfindungsalgorithmus 64 und der Notfallkollisionsvermeidungsalgorithmus 62 periodisch wiederholt ausgeführt, wobei vorzugsweise der Notfallkollisionsvermeidungsalgorithmus 62 mit einer höheren Frequenz ausgeführt wird wie der Wegfindungsalgorithmus 64. Wird beispielsweise ein externes Objekt 22 ermittelt, welches in einem direkt anschließenden Kurzzeit-Zeitintervall mit dem Gerät 12 kollidieren würde oder mit einer hohen Wahrscheinlichkeit könnte, wird in dem Verfahrensschritt 78 erst die Notfallsteuerung 66 ausgeführt und/oder über die Steuer- und/oder Regeleinheit 18 ausgelöst, anstatt oder bevor eine Bewegung des Geräts 12 entlang einer, insbesondere über den Wegfindungsalgorithmus 64, ermittelten anderen zukünftigen Fortbewegungsstrecke des Geräts 12 ausgeführt und/oder über die Steuer- und/oder Regeleinheit 18 ausgelöst wird.

In einem weiteren Verfahrensschritt 80 des Verfahrens 19 wird die zukünftige Fortbewegungsstrecke des Geräts 12 über die Notfallsteuerung 66, insbesondere eine Notfallbremsung und/oder eine Ausweichbewegung, oder über die durch den Wegfindungsalgorithmus 64 ermittelte zukünftige Fortbewegungsstrecke bestimmt. Vorzugsweise wird die bestimmte zukünftige Fortbewegungsstrecke des Geräts 12 über die Steuer- und/oder Regeleinheit 18 umgesetzt, wobei insbesondere eine Steuerung des Geräts 12 zu einer Bewegung entlang der bestimmten zukünftigen Fortbewegungsstrecke erfolgt. Beispielsweise wird mittels der Steuer- und/oder Regeleinheit 18 über Steuersignale die Antriebseinheit 16 und/oder zumindest eine Lenkeinheit des Geräts 12/der Vorrichtung gesteuert und/oder geregelt.

In Figur 3 ist insbesondere eine mögliche beispielhafte Ausgestaltung des Verfahrens 19 beschrieben. Es sind auch andere Ausgestaltungen des Verfahrens 19 denkbar, beispielsweise mit einer anderen Reihenfolge von Verfahrensschritten 68, 70, 72, 74, 76, 78, 80 und/oder einer anderen Anzahl von Verfahrensschritten 68, 70, 72, 74, 76, 78, 80.

## Patentansprüche

1. Verfahren zu einer Ermittlung einer Fortbewegungsrichtung und/oder einer zukünftigen Fortbewegungsstrecke eines zumindest teilautonomen oder autonomen bewegbaren Geräts (12), insbesondere eines Roboters und/oder eines Fahrzeugs, in einer dynamisch veränderlichen Umgebung (28), welches zumindest die folgenden Schritte (68, 72, 74) umfasst:
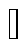 Erfassen und/oder Ermitteln einer Vielzahl von Umgebungsparametern, die jeweils zumindest einem sich bewegenden externen Objekt (22, 24, 26) in der das Gerät (12) umgebenden Umgebung (28) zuordenbar sind;
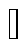 Ausführen zumindest eines Bewegungsprognosealgorithmus (36) zu einer Ermittlung von jeweils zumindest einer wahrscheinlichkeitstheoretischen Bewegungsprognosekenngröße für erfasste externe Objekte (22, 24, 26) in Abhängigkeit von den einzelnen externen Objekten (22, 24, 26) zugeordneten erfassten Umgebungsparametern;
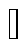 Ausführen zumindest eines Bewegungsbestimmungsalgorithmus (38) zu einer Ermittlung von jeweils zumindest einer Kurzzeitbewegungskenngröße für erfasste externe Objekte (22, 24, 26) in Abhängigkeit von den einzelnen externen Objekten (22, 24, 26) zugeordneten erfassten Umgebungsparametern, wobei die zumindest eine Kurzzeitbewegungskenngröße über ein physikalisches Rechenmodell eindeutig berechenbar ist;
wobei der Bewegungsprognosealgorithmus (36) und der Bewegungsbestimmungsalgorithmus (38) zu einer Ermittlung einer zukünftigen Fortbewegungsrichtung und/oder einer zukünftigen Fortbewegungsstrecke des Geräts (12) zumindest im Wesentlichen unabhängig voneinander ausgeführt werden.

2. Verfahren nach Anspruch 1, **gekennzeichnet durch** zumindest einen, insbesondere anschließend an den Bewegungsbestimmungsalgorithmus (38) erfolgenden, Schritt (78), in dem zumindest ein Notfallkollisionsvermei dungsalgorithmus (62) ausgeführt wird, welcher insbesondere als Teil einer modellprädiktiven Regelung des Geräts (12) ausgebildet ist, wobei mittels des Notfallkollisionsvermeidungsalgorithmus (62) eine Notfallsteuerung (66), insbesondere eine Notfallbremsung und/oder eine Ausweichbewegung, des Geräts (12) und/oder einer zukünftigen Fortbewegungsstrecke erfolgt, falls ein, insbesondere virtueller, Abstand einer Position des Geräts (12) auf der zukünftigen Fortbewegungsstrecke des Geräts (12) und einer in Abhängigkeit von einer ermittelten Kurzzeitbewegungskenngröße ermittelten zukünftigen Position eines externen Objekts (22, 24, 26) zu zumindest einem Zeitpunkt einen vorgegebenen Grenzwert unterschreitet.

3. Verfahren nach Anspruch 1 oder 2, **gekennzeichnet durch** zumindest einen, insbesondere anschließend an den Bewegungsprognosealgorithmus (36) erfolgenden, Schritt (76), in dem zumindest ein Wegfindungsalgorithmus (64), insbesondere ein Theta*-WegfindungsAlgorithmus, ausgeführt wird, wobei eine zukünftige Fortbewegungsstrecke des Geräts (12) mittels des Wegfindungsalgorithmus (64) in Abhängigkeit von den ermittelten wahrscheinlichkeitstheoretischen Bewegungsprognosekenngrößen der erfassten externen Objekte (22, 24, 26) dynamisch bestimmt wird.

4. Verfahren nach Anspruch 2 und 3, **dadurch gekennzeichnet, dass** der Bewegungsbestimmungsalgorithmus (38) zur Ermittlung einer zukünftigen Fortbewegungsstrecke und/oder Fortbewegungsrichtung des Geräts (12) in Abhängigkeit von den erfassten externen Objekten (22, 24, 26) in zumindest einem Schritt mit einer höheren Priorität berücksichtigt wird wie der Bewegungsprognosealgorithmus (36).

5. Verfahren nach einem der vorhergehenden Ansprüche, **gekennzeichnet durch** zumindest einen Schritt (74), insbesondere den Schritt zum Ausführen des Bewegungsbestimmungsalgorithmus (38), in dem in Abhängigkeit von einer Anzahl und/oder einer Art von verschiedenen erfassten Umgebungsparametern der einzelnen externen Objekte (22, 24, 26), insbesondere antiproportional, eine Anzahl von Kurzzeitbewegungskenngrößen oder von Werten einer Kurzzeitbewegungskenngröße für das jeweilige externe Objekt (22, 24, 26) ermittelt wird.

6. Verfahren nach einem der vorhergehenden Ansprüche, **gekennzeichnet durch** zumindest einen Schritt (74), insbesondere den Schritt zum Ausführen des Bewegungsbestimmungsalgorithmus (38), in dem zumindest eine Kurzzeitbewegungskenngröße eines erfassten externen Objekts (22, 24, 26) in Abhängigkeit von erfassten Umgebungsparametern des externen Objekts (22, 24, 26), insbesondere ausschließlich, mittels eines hinterlegten physikalischen Rechenmodells als eine rein-deterministische Größe ermittelt wird.

7. Verfahren nach einem der vorhergehenden Ansprüche, **gekennzeichnet durch** zumindest einen Schritt (70), in dem eine Gesamtheit von erfassten externen Objekten (22, 24, 26) auf sich bewegende oder bewegbare externe Objekte (22, 24) gefiltert wird, wobei, insbesondere bei einem Ausführen des Bewegungsbestimmungsalgorithmus (38), zu einer Ermittlung von Kurzzeitbewegungskenngrößen lediglich sich bewegenden oder bewegbaren externen Objekten (22, 24) zugeordnete Umgebungsparameter herangezogen werden.

8. Verfahren nach einem der vorhergehenden Ansprüche, **gekennzeichnet durch** zumindest einen Schritt (80), in dem zumindest eine über den Bewegungsbestimmungsalgorithmus (38) ermittelte Kurzzeitbewegungskenngröße eines externen Objekts (22, 24, 26) zu einer Ermittlung eines Umgebungsparameters des externen Objekts (22, 24, 26) herangezogen wird.

9. Verfahren nach einem der vorhergehenden Ansprüche, **dadurch gekennzeichnet, dass** der Bewegungsbestimmungsalgorithmus (38) und der Bewegungsprognosealgorithmus (36) periodisch wiederholt ausgeführt werden, wobei der Bewegungsbestimmungsalgorithmus (38) mit einer höheren Frequenz ausgeführt wird wie der Bewegungsprognosealgorithmus (36).

10. Vorrichtung oder System mit zumindest einer Recheneinheit, eingerichtet zu einer Durchführung eines Verfahrens (19) gemäß einem der vorhergehenden Ansprüche zu einer Ermittlung einer Fortbewegungsrichtung und/oder einer zukünftigen Fortbewegungsstrecke des Geräts (12) in einer dynamisch veränderlichen Umgebung (28).

11. Vorrichtung oder System nach Anspruch 10, wobei die Vorrichtung als ein teilautonomes oder autonomes bewegbares Gerät (12), insbesondere ein Roboter, ausgebildet ist.

## Claims

1. Method for ascertaining a direction of movement and/or a future path of movement of an at least semi-autonomous or autonomous movable device (12), in particular a robot and/or a vehicle, in a dynamically changing environment (28), comprising at least the following steps (68, 72, 74):
- acquiring and/or ascertaining a multiplicity of environmental parameters, each of which can be assigned to at least one moving external object (22, 24, 26) in the environment (28) surrounding the device (12);
- executing at least one motion prediction algorithm (36) to ascertain in each case at least one probability-theory-based motion prediction characteristic for detected external objects (22, 24, 26) on the basis of acquired environmental parameters assigned to the individual external objects (22, 24, 26);
- executing at least one motion determination algorithm (38) to ascertain in each case at least one short-term motion characteristic for detected external objects (22, 24, 26) on the basis of the acquired environmental parameters assigned to individual external objects (22, 24, 26), the at least one short-term motion characteristic being unequivocally computable by way of a physical computation model;
wherein the motion prediction algorithm (36) and the motion determination algorithm (38) are executed at least substantially independently of each other to ascertain a future direction of movement and/or a future path of movement of the device (12).

2. Method according to Claim 1, **characterized by** at least one step (78), in particular performed subsequent to the motion determination algorithm (38), in which at least one emergency collision avoidance algorithm (62), which is in particular in the form of part of model-predictive closed-loop control of the device (12), is executed, the emergency collision avoidance algorithm (62) being used to perform emergency control (66), in particular emergency braking and/or evasive movement, of the device (12) and/or a future path of movement if a, in particular virtual, distance between a position of the device (12) on the future path of movement of the device (12) and a future position of an external object (22, 24, 26) ascertained on the basis of an ascertained short-term motion characteristic falls below a specified limit value at at least one time.

3. Method according to Claim 1 or 2, **characterized by** at least one step (76), in particular performed subsequent to the motion prediction algorithm (36), in which at least one pathfinding algorithm (64), in particular a theta* pathfinding algorithm, is executed, a future path of movement of the device (12) being determined dynamically by means of the pathfinding algorithm (64) on the basis of the ascertained probability-theory-based motion prediction characteristics of the detected external objects (22, 24, 26).

4. Method according to Claims 2 and 3, **characterized in that** the motion determination algorithm (38) is taken into account with a higher priority than the motion prediction algorithm (36) in at least one step to ascertain a future path of movement and/or direction of movement of the device (12) on the basis of the detected external objects (22, 24, 26).

5. Method according to one of the preceding claims, **characterized by** at least one step (74), in particular the step for executing the motion determination algorithm (38), in which a number and/or type of different acquired environmental parameters of the individual external objects (22, 24, 26) are taken as a basis for, in particular inversely proportionally, ascertaining a number of short-term motion characteristics or values of a short-term motion characteristic for the respective external object (22, 24, 26).

6. Method according to one of the preceding claims, **characterized by** at least one step (74), in particular the step for executing the motion determination algorithm (38), in which at least one short-term motion characteristic of a detected external object (22, 24, 26) is ascertained, in particular exclusively, by means of a stored physical computation model as a purely deterministic quantity on the basis of acquired environmental parameters of the external object (22, 24, 26).

7. Method according to one of the preceding claims, **characterized by** at least one step (70) in which a set of detected external objects (22, 24, 26) is filtered for moving or movable external objects (22, 24), and, in particular when the motion determination algorithm (38) is executed, short-term motion characteristics are ascertained using only environmental parameters that are assigned to moving or movable external objects (22, 24).

8. Method according to one of the preceding claims, **characterized by** at least one step (80) in which at least one short-term motion characteristic of an external object (22, 24, 26) ascertained by way of the motion determination algorithm (38) is used to ascertain an environmental parameter of the external object (22, 24, 26).

9. Method according to one of the preceding claims, **characterized in that** the motion determination algorithm (38) and the motion prediction algorithm (36) are periodically repeatedly executed, the motion determination algorithm (38) being executed at a higher frequency than the motion prediction algorithm (36).

10. Device or system having at least one computing unit, configured to carry out a method (19) according to one of the preceding claims for ascertaining a direction of movement and/or a future path of movement of the device (12) in a dynamically changing environment (28).

11. Device or system according to Claim 10, wherein the device is in the form of a semi-autonomous or autonomous movable device (12), in particular a robot.

## Revendications

1. Procédé pour déterminer une direction de déplacement et/ou un trajet futur de déplacement d'un appareil mobile (12) autonome ou au moins partiellement autonome ou , en particulier d'un robot et/ou d'un véhicule, dans un environnement (28) variable de manière dynamique, qui comprend au moins les étapes suivantes (68, 72, 74) :
- détection et/ou détermination d'une pluralité de paramètres environnementaux qui sont aptes à être attribués chacun à au moins un objet externe mobile (22, 24, 26) dans l'environnement (28) entourant l'appareil (12) ;
- exécution d'au moins un algorithme (36) de prévision de mouvement pour déterminer chaque fois au moins une grandeur caractéristique de prévision de mouvement probabiliste pour des objets externes détectés (22, 24, 26) en fonction des paramètres environnementaux détectés associés aux différents objets externes (22, 24, 26) ;
- exécution d'au moins un algorithme (38) de détermination de mouvement pour déterminer chaque fois au moins une grandeur caractéristique de mouvement à court terme pour des objets externes détectés (22, 24, 26) en fonction des paramètres environnementaux détectés associés aux différents objets externes (22, 24, 26), ladite au moins une grandeur caractéristique de mouvement à court terme étant apte à être calculée de manière univoque au moyen d'un modèle de calcul physique ;
l'algorithme (36) de prévision de mouvement et l'algorithme (38) de détermination de mouvement étant exécutés au moins essentiellement indépendamment l'un de l'autre pour déterminer une direction de déplacement future et/ou un trajet de déplacement futur de l'appareil (12).

2. Procédé selon la revendication 1, **caractérisé par** au moins une étape (78), en particulier mise en œuvre consécutivement à l'algorithme (38) de détermination de mouvement, au cours de laquelle au moins un algorithme (62) de prévention de collision d'urgence est exécuté, lequel est notamment conçu sous forme de partie d'une régulation prédictive de modèle de l'appareil (12), l'algorithme (62) de prévention de collision d'urgence exécutant une commande d'urgence (66), en particulier un freinage d'urgence et/ou un mouvement d'évitement de l'appareil (12) et/ou d'un trajet de déplacement futur, si une distance, en particulier virtuelle, entre une position de l'appareil (12) sur le trajet de déplacement futur de l'appareil (12) et une position future d'un objet externe (22, 24, 26) déterminée en fonction d'une grandeur caractéristique de mouvement à court terme déterminé, devient inférieure à une valeur limite prédéfinie à au moins un moment donné.

3. Procédé selon la revendication 1 ou la revendication 2, **caractérisé par** au moins une étape (76), en particulier mise en œuvre consécutivement à l'algorithme (36) de prévision de mouvement, dans laquelle au moins un algorithme (64) de recherche de trajet, en particulier un algorithme de recherche de trajet Thêta*, est exécuté, un trajet de déplacement futur de l'appareil (12) étant déterminé de manière dynamique au moyen de l'algorithme (64) de recherche de trajet en fonction des grandeurs caractéristiques de prévision de mouvement probabilistes déterminées des objets externes (22, 24, 26) détectés.

4. Procédé selon les revendications 2 et 3, **caractérisé en ce que** l'algorithme (38) de détermination de mouvement pour déterminer un trajet de déplacement futur et/ou une direction de déplacement de l'appareil (12) en fonction des objets externes détectés (22, 24, 26) est pris en compte dans au moins une étape, avec une priorité supérieure à celle de l'algorithme (36) de prévision de mouvement.

5. Procédé selon l'une des revendications précédentes, **caractérisé par** au moins une étape (74), en particulier l'étape d'exécution de l'algorithme (38) de détermination de mouvement, dans laquelle, dans laquelle, en fonction d'un nombre et/ou d'un type de différents paramètres environnementaux détectés des différents objets externes (22, 24, 26), en particulier de manière inversement proportionnelle, un nombre de grandeurs caractéristiques de mouvement à court terme ou de valeurs d'une grandeur caractéristique de mouvement à court terme est déterminé pour l'objet externe respectif (22, 24, 26).

6. Procédé selon l'une des revendications précédentes, **caractérisé par** au moins une étape (74), en particulier l'étape d'exécution de l'algorithme (38) de détermination de mouvement, dans laquelle au moins une grandeur caractéristique de mouvement à court terme d'un objet externe détecté (22, 24, 26) est déterminée en fonction de paramètres environnementaux détectés de l'objet externe (22, 24, 26), en particulier exclusivement, au moyen d'un modèle de calcul physique enregistré, sous forme d'une grandeur purement déterministe.

7. Procédé selon l'une des revendications précédentes, **caractérisé par** au moins une étape (70) dans laquelle un ensemble d'objets externes détectés (22, 24, 26) est filtré pour obtenir des objets externes (22, 24) en déplacement ou aptes à être déplacés, dans lequel, en particulier lors d'une exécution de l'algorithme (38) de détermination de mouvement, seuls des paramètres environnementaux associés à des objets externes (22, 24) en déplacement ou aptes à être déplacés sont utilisés pour déterminer des grandeurs caractéristiques de mouvement à court terme.

8. Procédé selon l'une des revendications précédentes, **caractérisé par** au moins une étape (80) dans laquelle au moins une grandeur caractéristique de mouvement à court terme d'un objet externe (22, 24, 26) déterminée au moyen de l'algorithme (38) de détermination de mouvement est utilisée pour déterminer un paramètre environnemental de l'objet externe (22, 24, 26).

9. Procédé selon l'une des revendications précédentes, **caractérisé en ce que** l'algorithme (38) de détermination de mouvement et l'algorithme (36) de prévision de mouvement sont exécutés de manière répétée à intervalles réguliers, l'algorithme (38) de détermination de mouvement étant exécuté à une fréquence plus élevée que l'algorithme (36) de prévision de mouvement.

10. Dispositif ou système comprenant au moins une unité de calcul, conçu pour mettre en œuvre un procédé (19) selon l'une des revendications précédentes afin de déterminer une direction de déplacement et/ou un trajet de déplacement futur de l'appareil (12) dans un environnement dynamique variable (28).

11. Dispositif ou système selon la revendication 10, dans lequel le dispositif est conçu sous forme d'un appareil mobile semi-autonome ou autonome (12), en particulier un robot.
